# EUROPEAN PATENT APPLICATION

(11) **EP 1 156 362 A1**
(43) Date of publication of application: **21.11.2001**
(21) Application number: 01201313.2
(22) Date of filing: 18.05.1987
(51) Int. Cl.: G02F 1/13363, G02F 1/1347, G02F 1/139

(54) **A liquid crystal display device**

(30) Priority: 19.05.1986 JP 11429986; 22.07.1986 JP 17214286; 22.07.1986 JP 17214386; 22.07.1986 JP 17214486; 19.12.1986 JP 30316886
(62) Divisional of application: 97105751.8
(71) Applicant: SEIKO EPSON CORPORATION, Shinjuku-ku Tokyo (JP)
(72) Inventor: Wada, Hiroshi, c/o Seiko Epson Corporation, Suwa-shi, Nagano-ken (JP); Wada, Shinji, c/o Seiko Epson Corporation, Suwa-shi, Nagano-ken (JP); Iijima, Chiyoaki, c/o Seiko Epson Corporation, Suwa-shi, Nagano-ken (JP)
(74) Representative: Sturt, Clifford Mark

(57) **Abstract**

A liquid crystal display device which has a nematic liquid crystal layer (424) oriented at a twist angle and a linear polariser (422) which emits linearly polarised light (231,232,233) towards the nematic liquid crystal layer, characterised in that: the polarisation axis of the linear polariser is neither perpendicular nor parallel to the molecule longer axis of the nematic liquid crystal at the surface where the linearly polarised light comes in so that the nematic liquid crystal layer transforms a polarisation state of the linearly polarised light, wherein an optically anisotropic substance (428), which makes an inverse transformation against the transformation made by the nematic liquid crystal layer, is disposed on the opposite side of the nematic liquid crystal layer compared to the polariser. Alternatively, the optically anisotropic substance can be disposed on the opposite side of the liquid crystal layer compared to the polariser.

## Description

This invention relates to a liquid crystal display device.

US Patent 4,443,065 discloses a double-layered twisted nematic liquid crystal display device with one layer thereof compensating for interference colouring of inoperative elements of the display area.

Japanese Laid Open Patent Specification No. 60-50511 discloses a super twisted nematic liquid crystal display device which has a twist angle of the liquid crystal molecule of more than 90°, and a pair of polarisers provided on upper and lower liquid crystal cells. An angle between the polarising axes (absorption axes) and the axis direction of the liquid crystal molecule adjacent to the electrode substrate falls within a range of 30° to 60°. Therefore, because of birefringence, when the liquid crystal display device is in the state of not applying voltage, its appearance is not white and instead its appearance is green to reddish yellow. Furthermore, when the liquid crystal device is in the state of applying voltage, its appearance is not black but instead its appearance is blue. More specifically, the known liquid crystal display device becomes green, yellowish green, yellow or reddish yellow in the positive display state and, when a selecting voltage is applied, the liquid crystal display device becomes blue or dark blue. The colour of the liquid crystal display device becomes dark blue in a negative display state and, when the selecting voltage is applied, the colour turns to yellow. These above mentioned colours are not desirable as display colours. White and black are the most suitable display colours for a liquid crystal display device.

There is a need for a liquid crystal display device having a monochrome black and white display and, in one aspect of the invention, it is an aim of the present invention to provide such a device having a monochrome black and white display in the positive and negative display states.

According to a first aspect of the present invention there is provided a liquid crystal display device which has a nematic liquid crystal layer oriented at a twist angle and a linear polariser which emits linearly polarised light towards the nematic liquid crystal layer, characterised in that:
the polarisation axis of the linear polariser is neither perpendicular nor parallel to the molecule longer axis of the nematic liquid crystal at the surface where the linearly polarised light comes in so that the nematic liquid crystal layer transforms a polarisation state of the linearly polarised light,
wherein an optically anisotropic substance, which makes an inverse transformation against the transformation made by the nematic liquid crystal layer, is disposed on the opposite side of the nematic liquid crystal layer compared to the polariser.

According to a second aspect of the present invention there is provided a liquid crystal display device which has a nematic liquid crystal layer oriented at a twist angle and a linear polariser which emits linearly polarised light, characterised in that:
an optically anisotropic substance whose optical axis is neither perpendicular nor parallel to the direction of the polarisation axis of the linear polariser, is disposed between the nematic liquid crystal and the linear polariser so that the optically anisotropic substance transforms a polarisation state of the linearly polarised light,
wherein the optically anisotropic substance makes an inverse transformation against the transformation made by the nematic liquid crystal layer.

The optically anisotropic substance may be a liquid crystal which is oriented between two opposite substrates. The optically anisotropic substance may be in a polymeric film state.

If desired, the optically anisotropic substance may be twisted in a different direction from the twist direction of the twist nematic liquid crystal.

If more than two layers of the optically anisotropic substance are used, the directions of light axes between at least two layers are preferably different.

In order to facilitate a full and complete understanding of the invention, reference will now be made to the accompanying drawings and to the following Examples. In the accompanying drawings:
Figure 1 is a sectional view showing schematically the structure of a liquid crystal display device useful in understanding the present invention;
Figure 2 shows the relationship of each axis of a liquid crystal display device useful in understanding the present invention;
Figure 3 shows the relationship of each axis of a liquid crystal display device according to prior art;
Figure 4 shows the relationship between the external wavelength and the transmission according to a prior liquid crystal display device;
Figure 5 shows the twist angle and the region of Δn × d of the A-cell of the liquid crystal display device according to Example 1;
Figure 6 shows the relationship between the external wavelength and the transmission of the liquid crystal display device according to Example 2;
Figure 7 shows the relationship between the external wavelength and the transmission of the liquid crystal display device according to Example 3;
Figure 8 shows the relationship between the external wavelength and the transmitting state of the liquid crystal display device according to Example 4;
Figure 9 shows the relationship between the twist angle and the region of Δ n x d of the liquid crystal of the A-cell of the liquid crystal display device according to Example 5;
Figure 10 shows the relationship between the external wavelength and the transmission of the liquid crystal display device according to Example 6;
Figure 11 shows the relationship between the twist angle and the region of Δn x d of the liquid crystal of the A-cell of the liquid crystal display device according to Example 9;
Figure 12 shows the relationship between the twist angle and the region of Δn x d of the Liquid crystal of the A-cell of the liquid crystal display device according to Example 10;
Figure 13 shows the relationship between the twist angle and the region of Δn x d of the liquid crystal of the A-cell of the liquid crystal display device according to Example 11;
Figure 14 shows the relationship between the twist angle and the region of Δn x d of the liquid crystal of the A-cell of the liquid crystal display device according to Example 12;
Figure 15 is a sectional view showing schematically the structure of the liquid crystal display device according to Example 13;
Figure 16 shows a structure employing a film state polymer layer as the optically anisotropic substance;
Figure 17 shows the relationship of each axis of a liquid crystal display device employing the A-film;
Figure 18 shows schematically a structure where the A-film and the polariser are in one body;
Figure 19 shows schematically the structure of another liquid crystal display device useful in understanding the present invention;
Figure 20 shows the "off state" optical characteristics of the liquid crystal display device;
Figure 21 illustrates the relationship between the liquid crystal cell, the polarised substrate, and the optically anisotropic substance in the liquid crystal display device shown in Figure 19;
Figure 22 shows a spectrum in which transmission is plotted against wavelength; '
Figure 23 shows the spectrum of Figure 22 plotted on a chromaticity diagram;
Figure 24 is similar to Figure 20 and explains further conditions relating to the "off state";
Figure 25 is similar to Figure 21 and shows the condition of the structure shown in Figure 24;
Figure 26 is similar to Figure 22 and shows the spectrum of the off state;
Figure 27 is similar to Figure 23 and shows a plot on the colour coordinate;
Figure 28 shows the structure of liquid crystal display device according to the present invention;
Figure 29(a) illustrates dividing the liquid crystal layer into many layers;
Figure 29(b) illustrates the liquid crystal layers which are not twisted;
Figures 30-32 show the transition of the polarising state;
Figure 33 shows the spectrum of a commercially available polariser;
Figure 34 illustrates the driving of a liquid crystal display device of the invention;
Figure 35 shows the structure of the prior art liquid crystal display device of Japanese Laid Open Patent Specification No. 60-50511;
Figure 36 is like Figures 20 and 24 and shows schematically the off state characteristics of the above mentioned prior art super twisted nematic liquid crystal display device;
Figure 37 shows the relationship between the prior art super twisted nematic liquid crystal display device of Figure 36 and the direction of the polarising axes (absorption axes) of the polariser;
Figure 38 shows the external appearance spectrum of the Liquid crystal display device when certain angular positions appertain in Figure 37; and
Figure 39 is the plot of I and II in Figure 20 on colour coordinates.

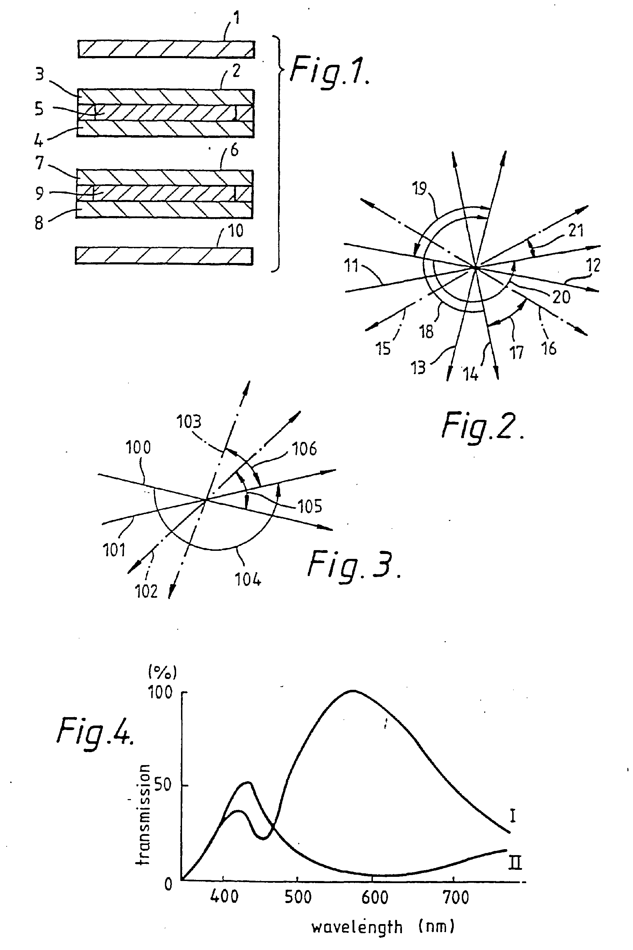

Referring to the drawings, Figure 1 is a sectional view showing schematically the structure of a Liquid crystal display device employing a liquid crystal as the optically anisotropic substance in the liquid crystal display device. In Figure 1, there is shown an upper polariser 1 and a Liquid crystal cell 2. The Liquid crystal cell 2 has a liquid crystal as an optically anisotropic substance sandwiched between two substrates, the liquid crystal cell 2 being hereinafter referred to as an A-cell. More specifically, the A-cell 2 has an upper substrate 3, a lower substrate 4, and a liquid crystal 5 which is used as the optically anisotropic substance in the A-cell. Also shown in Figure 1 is a liquid crystal cell 6 for providing a display by applying a voltage. The Liquid crystal cell 6 is hereinafter referred to as a B-cell. The B-cell comprises an upper electrode substrate 7, a lower electrode substrate 8 and a liquid crystal 9. As shown in Figure 1, the liquid crystal display device includes a lower polariser 10.

Referring now to Figure 2, there is shown the relationship of each axis of the liquid crystal display device. In Figure 2, there is shown a rubbing direction 11 of the lower electrode substrate 8 of the B-cell, a rubbing direction 12 of the upper electrode substrate 7 of the B-cell, a rubbing direction 13 of the lower substrate 4 of the A-cell, a rubbing direction 14 of the upper substrate 3 of the A-cell, a direction 15 of the polarising axes (absorption axes) of the lower polariser 10, a direction 16 of the polarising axes (absorption axes) of the upper polariser 1, an angle 17 between the direction 16 of the polarising axes (absorption axes) of the upper polariser 1 and the rubbing direction 14 of the upper substrate 3 of the A-cell, a twist angle 18 of the liquid crystal 5 within the A-cell, an angle 19 between the rubbing direction 13 of the lower substrate 4 of the A-cell and the rubbing direction 12 of the upper electrode 7 substrate of the B-cell, a twist angle 20 of the Liquid crystal 9 within the B-cell, and an angle 21 between the rubbing direction 11 of the lower electrode substrate 8 of the B-cell and the direction 15 of the polarising axes (absorption axes) of the lower polariser 10.

The twist direction of the liquid crystal molecule within each cell is hereinafter shown with the twist direction extending towards the bottom from the top of the cell. Also, when'the selecting or the non-selecting voltage is applied by 1/100 duty driving, it is defined that the state which has substantial optical transmitting power is the "OFF" state, and the state which has little optical transmitting power is the "ON" state.

In the liquid crystal display the twist angle of the liquid crystal 9 of the B-cell has no Limit in size. The practical embodiments of the liquid crystal display device is as follows.

As the liquid crystal which is employed in the A-cell and the B-cell, there can be used phenyl cyclohexane, biphenyl cyclohexane species mixing nematic liquid crystal and 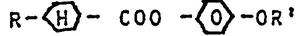 species mixing liquid crystal whose dielectric anisotropy Δε < 0. The same liquid crystal can be used for either the A-cell or the B-cell. Further, the same effect can be obtained even from the using of a different liquid crystal in the A-cell and the B-cell. In order to obtain the twist of the liquid crystal molecules in the A-cell and the B-cell, CB-15 (a product of BDH Company) or S-811 (a product of Merk Company) may be used as an optical activator.

In the Liquid crystal display device, when the linearly polarised light which passes through one of the pair of polarisers, passes through the liquid crystal cell, there results elliptically polarised light whose oblateness does not coincide with the direction of the long axis due to the wavelength. Then, the elliptically polarised light is passed through the optically anisotropic substance. The Light which passes through the optically anisotropic substance has a large oblateness in the range from about 400nm to about 700nm. Further, the Light becomes elliptically polarised light whose direction in the long axis is almost uniform. Light which passes through the other polariser has a small difference of transmission due to the wavelength, and the light becomes white in colour. Even at the time when the selecting voltage is applied, when the linearly polarised light which passes through one of the pair of polarisers, passes through the liquid crystal cell, elliptically polarised light is produced whose oblateness does not coincide with the direction of the long axis due to the wavelength. Then, when the light passes through the optically anisotropic substance, there can be obtained the elliptically polarised substance whose oblateness is large, and whose direction in the long axis is almost uniform. At this time, since the direction of the long axis of the elliptically polarised light is twisted at the angle of about 90° with respect to the direction of the long axis of the elliptically polarised light at the time when the voltage is not applied, the direction of the polarising axis of the polariser is determined at the suitable value, thereby enabling the liquid crystal display device to give a monochrome display.

The state (the oblateness, the direction of long axis) of the polarised light which is emitted from the optically anisotropic substance will now be described.

Firstly, when two linearly polarised lights which vibrate in a direction perpendicular to each other are synthesised, elliptically polarised light which vibrates on the ellipse can be obtained. The elliptically polarised light can be obtained by the following formulas.$\text{X = A sin wt + B cos wt}$$\text{Y = C sin wt + D cos wt}$ (w is a circular frequency)

Secondly, the elliptically polarised light which passes through the uniaxial optically anisotropic substance (the birefringence is represented as Δn = n₁₁ - n_{┴} and the layer thickness is represented as d) can be obtained by the following formulas.${\text{Xm = A sin (wt + 2π n}}_{\text{11}} {\text{d/λ) + B cos (wt + 2π n}}_{\text{11}} \text{d/λ)}$${\text{Ym = C sin (wt + 2π n}}_{\text{┴}} {\text{d/λ) + D cos (wt + 2π n}}_{\text{┴}} \text{d/λ)}$ (λ is a wavelength of the light)

In the case of the twist orientated liquid crystal layer, the state of the polarised light at the time of passing through each layer is calculated successively by laminating a uniaxial optically anisotropic substance (it is defined that the birefringence is Δn = n₁₁ - n_{┴} and the layer thickness is d) represented as the above formulas (3) and (4) at the rotating angle (the amount thereof becomes the twist angle of the liquid crystal layer). Thus, the state at the time of passing through the liquid crystal layer is found.

The state of vibration at the number of (m+1)th can be found by the following formulas.$\text{X m+1 = Xm cos θ + Ym sin θ}$$\text{Y m+1 = -Xm sin θ+ Ym cosθ}$

The state of the elliptically polarised Light which passes through the optically anisotropic substance comprising the liquid crystal layer or the Like can be found by the method of substituting the formulas (3) and (4) to Xm and Ym in the formulas (5) and (6).

The state of the elliptically polarised Light is calculated at the intervals of the wavelength of each light. Then the state of the light which is emitted, is shown in the spectrum. The elliptical shape of the light and the long axis direction may also be determined. Since the spectrum has little difference in the transmission amount between each wavelength, the emitted light becomes close to the required white colour.

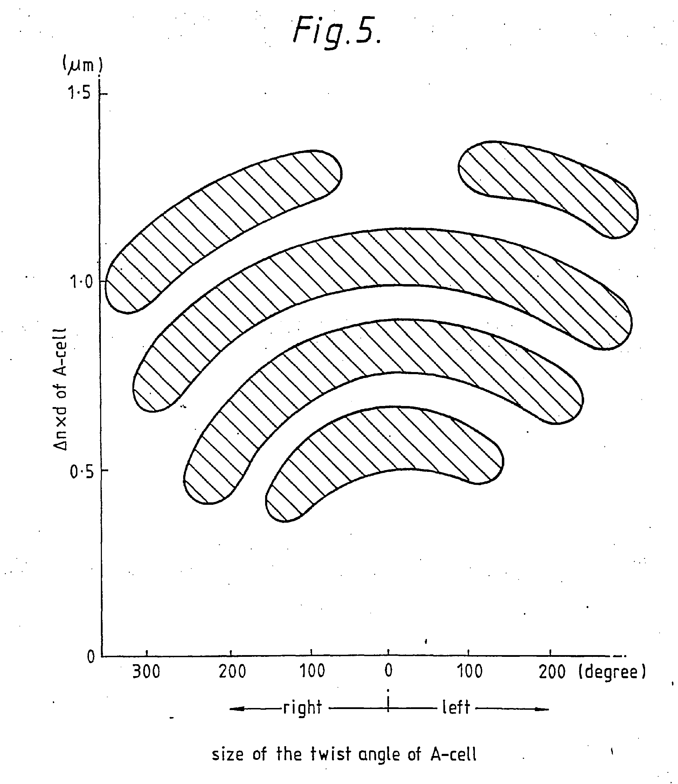

As a result of the above, Figures 5, 9, and 11 to 14 show the best suitable conditions. These Figures show the desirable range of the twist angle and Δn x d of the optically anisotropic substance using the liquid crystal at the time of determining the twist angle and Δn x d of the liquid crystal cell performing the display.

### EXAMPLE 1

In Figure 2, it is defined that the twist angle 20 of the liquid crystal of the B-cell is about 200° to the left direction, Δn x d is about 0.9µm, the angle 19 is about 90°, the angle 17 is from 30° to 60°, and the angle 21 is from 30° to 60°. When the twist angle 18 and Δn x d of the liquid crystal of the A-cell are defined as the region which is marked with the oblique lines as shown in Figure 5, a Liquid crystal display device can be obtained wherein it becomes white in colour in the "OFF" state but becomes black in colour in the "ON" state.

### EXAMPLE 2

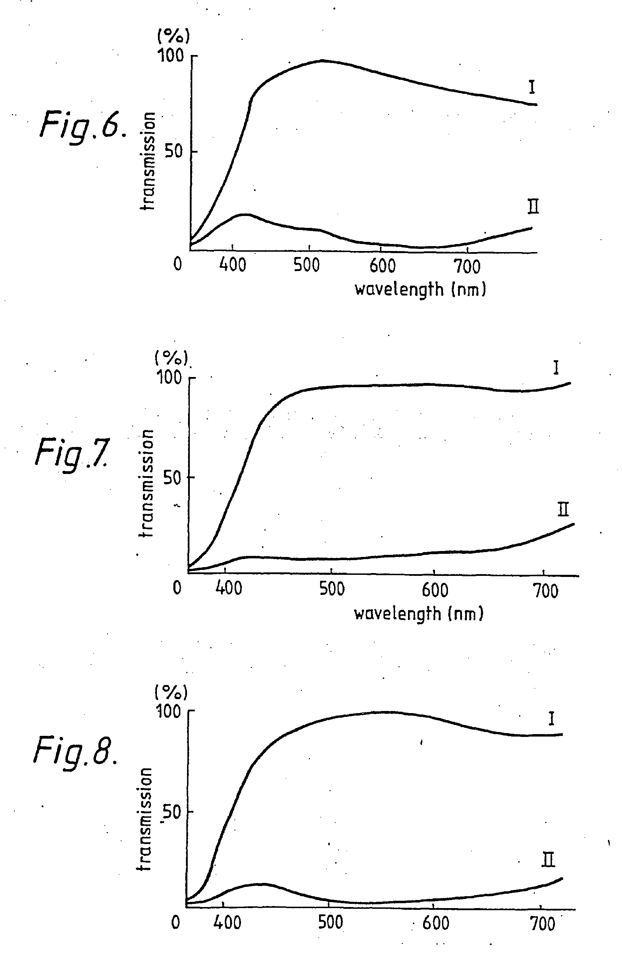

In Example 1, it is defined that the angle 17 of Figure 2 is about 40°, the twist angle 18 of the liquid crystal molecule is about 140° to the right direction, the angle 19 is about 90°, the twist angle 20 of the liquid crystal molecule is about 200° to the left direction, the angle 21 is about 40°, Δn x d of the liquid crystal layer of the A-cell is about 0.7µm, and Δn x d of the liquid crystal layer of the B-cell is about 0.9µm. Figure 6 shows the external spectrum of the liquid crystal display device thereupon. In Figure 6, the curve I shows the "OFF" state, and the curve II shows the "ON" state. According to prior art as shown in Figure 4, the external spectrum of the liquid crystal-display device becomes yellow in colour in the "OFF" state (curve I), whilst the same becomes blue in colour in the "ON" state (curve II). However, as shown in Figure 6, in the liquid crystal display device according to this example, the external spectrum of the liquid crystal display device becomes white in colour in the "OFF" state, whilst the same becomes black in colour in the "ON" state.

### EXAMPLE 3

In Example 1, it is defined that the angle 17 of Figure 2 is about 40°, the twist angle 18 of the liquid crystal molecule is about 200° to the right direction, the angle 19 is about 90°, the twist angle 20 of the liquid crystal molecule is about 200° to the left direction, the angle 21 is about 50°, Δn x d of the liquid crystal layer of the A-cell is about 0.9 µm, and Δn x d of the Liquid crystal layer of the B-cell is about 0.9µm. Figure 7 shows the external spectrum of the liquid crystal display device thereupon. In Figure 7, the curve I shows the "OFF" state, whilst the curve II shows "ON" state. In this case, as in Example 2, the external spectrum of the liquid crystal display device becomes white in colour in the "OFF" state, whilst the same becomes black in colour in the "ON" state.

### EXAMPLE 4

In Example 1, it is defined that the angle 17 of Figure 2 is about 40°, the twist angle 18 of the liquid crystal molecule is about 260° to the right direction, the angle 19 is about 90°, the twist angle 20 of the liquid crystal molecule is about 200° to the left direction, the angle 21 is about 40°, Δn x d of the liquid crystal layer of the A-cell is about 0.8µm, and Δn x d of the Liquid crystal layer of the B-cell is about 0.9µm. Figure 8 shows the external spectrum of the liquid crystal display device thereupon. In Figure 8, the curve I shows the "OFF" state, whilst the curve II shows the "ON" state. In this case, as in Examples 2 and 3, the external spectrum of the liquid crystal display device becomes white in colour in the "OFF" state, whilst the same becomes black in colour in the "ON" state.

### EXAMPLE 5

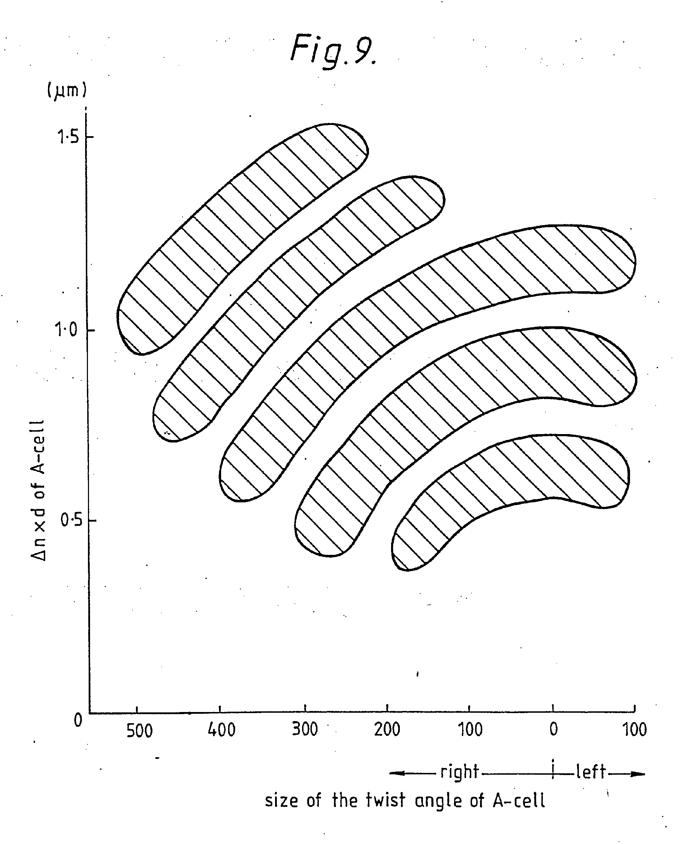

In Figure 2, it is defined that the twist angle of the liquid crystal of the B-cell 20 is about 250° to the left direction, Δn x d is about 0.9 µm, the angle 19 is about 90°, the angle 17 is between 30° and 60°, and the angle 21 is between 30° and 60°. When the twist angle 18 and Δn x d of the liquid crystal of the A-cell are defined as the region which is marked with the oblique lines as shown in Figure 9, a liquid crystal display device can be obtained wherein the external spectrum of the liquid crystal display device becomes white in colour in the "OFF" state, whilst the same becomes black in colour in the "ON" state.

### EXAMPLE 6

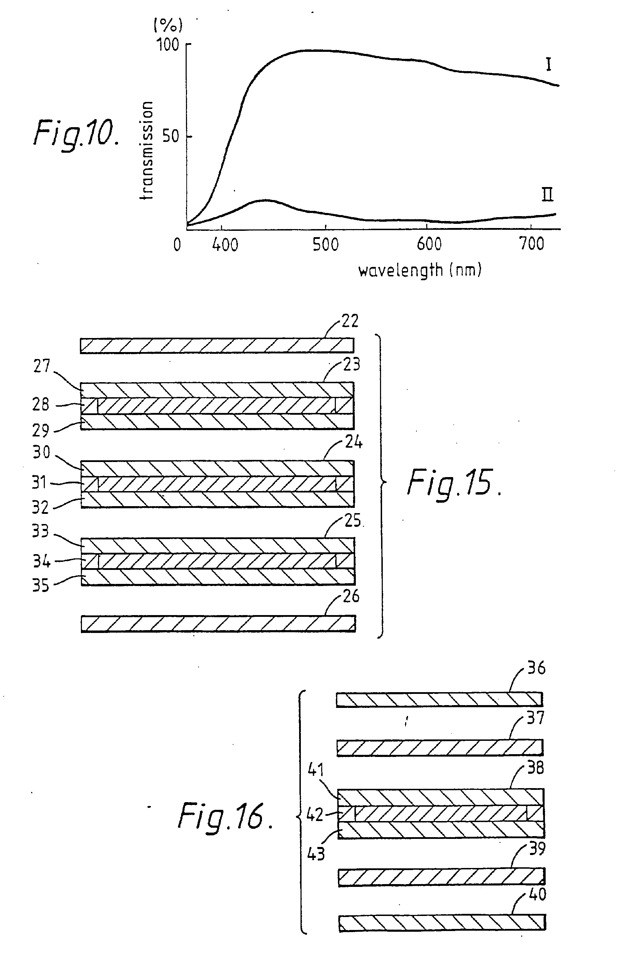

In Example 5, it is defined that the angle 17 of Figure 2 is about 40°, the twist angle 18 of the liquid crystal molecule is about 160° to the right direction, the angle 19 is about 90°, the twist angle 20 of the liquid crystal molecule is about 250° to the Left direction, the angle 21 is about 40°, Δn x d of the Liquid crystal layer of the A-cell is about 0.8 µm, and Δn x d of the liquid crystal Layer of the B-cell is about 0.9 µm. Figure 10 shows the external spectrum of the liquid crystal display device thereupon. In Figure 10, the curve I shows the "OFF" state, and the curve II shows the "ON" state. In this case, as in Example 2, the external spectrum of the liquid crystal display device becomes white in colour in the "OFF" state, whilst the same becomes black in colour in the "ON" state.

### EXAMPLE 7

In Figure 2, it is defined that the angle 17 is about 40°, the twist angle 18 of the liquid crystal molecule is about 360° to the right direction, the angle 19 is about 90°, the twist angle 20 of the Liquid crystal molecule is about 250° to the left direction, and the angle 21 is about 40°. Further, Δn x d of the liquid crystal layer of the A-cell is about 1.0 µm, and Δn x d of the liquid crystal layer of the B-cell is about 0.9µm. In this case, the external spectrum of the liquid crystal display device becomes white in colour in the "OFF" state, whilst the same becomes black in colour in the "ON" state.

### EXAMPLE 8

In Figure 2, it is defined that the angle 17 is about 50°, the twist angle 18 of the liquid crystal molecule is about 170° to the right direction, the angle 19 is about 90°, the twist angle 20 of the liquid crystal is about 170° to the Left direction, and the angle 21 is about 40°. Further, Δn x d of the Liquid crystal layer of the A-cell is about 0.7 µm, and Δn x d of the liquid crystal Layer of the B-cell is about 0.7µm. In this case, there can be obtained a Liquid crystal display device having a high response speed, wherein the external spectrum of the Liquid crystal display device becomes white in colour in the "OFF" state, whilst the same becomes bLack in colour in the "ON" state.

### EXAMPLE 9

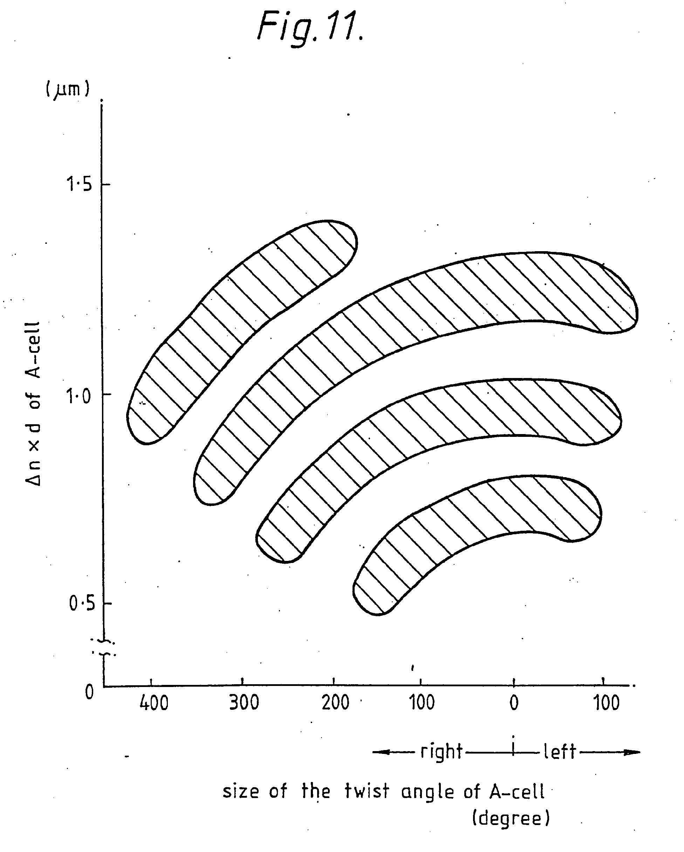

In Figure 2, it is defined that the twist angle 20 of the liquid crystal of the B-cell is about 120° to the Left direction, Δn x d is about 0.9µm, the angLe 19 is about 90°, the angle 17 is between 30° and 60°, and the angle 21 is between 30° and 60°. When the twist angle 18 and the Δn x d of the Liquid crystal of the A-cell are defined as the region which is marked with the oblique lines as shown in Figure 11, a liquid crystal display device can be obtained wherein the external spectrum of the Liquid crystal display device becomes white in colour in the "OFF" state, whilst the same becomes black in colour in the "ON" state.

### EXAMPLE 10

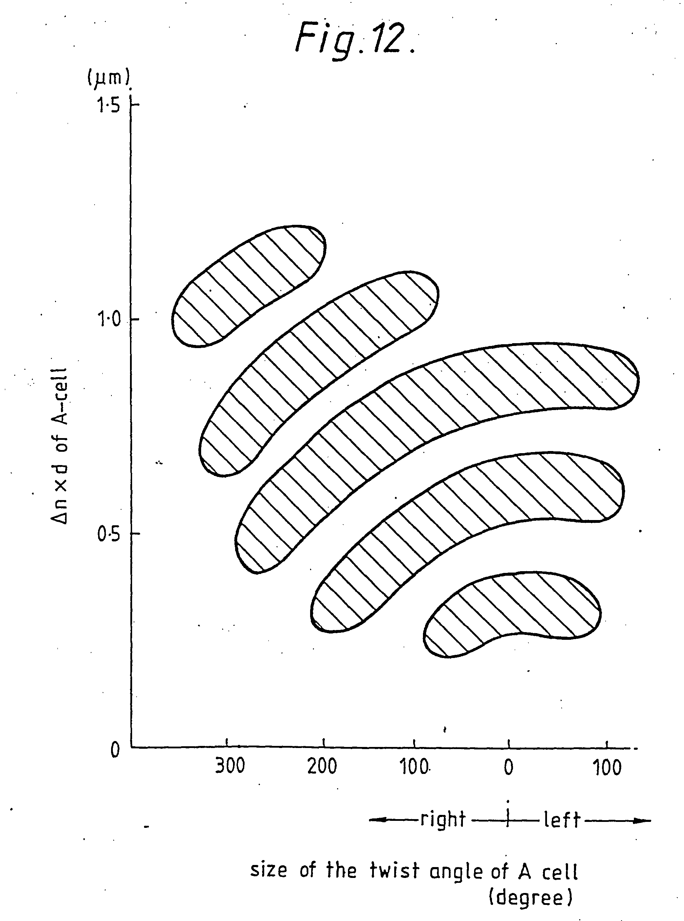

In Figure 2, it is defined that the twist angle 20 of the liquid crystal of the B-cell is about 200° to the Left direction, Δn x d is about 0.6 µm, the angle 19 is about 90°, the angle 17 is between 30° and 60°, and the angle 21 is between 30° and 60°. When the twist angle 18 and Δn x d of the liquid crystal of the A-cell are defined as the region which is marked with the oblique lines as shown in Figure 12, a Liquid crystal display device can be obtained wherein the external spectrum of the liquid crystal display device becomes white in colour in the "OFF" state, whilst the same becomes black in colour in the "ON" state.

### EXAMPLE 11

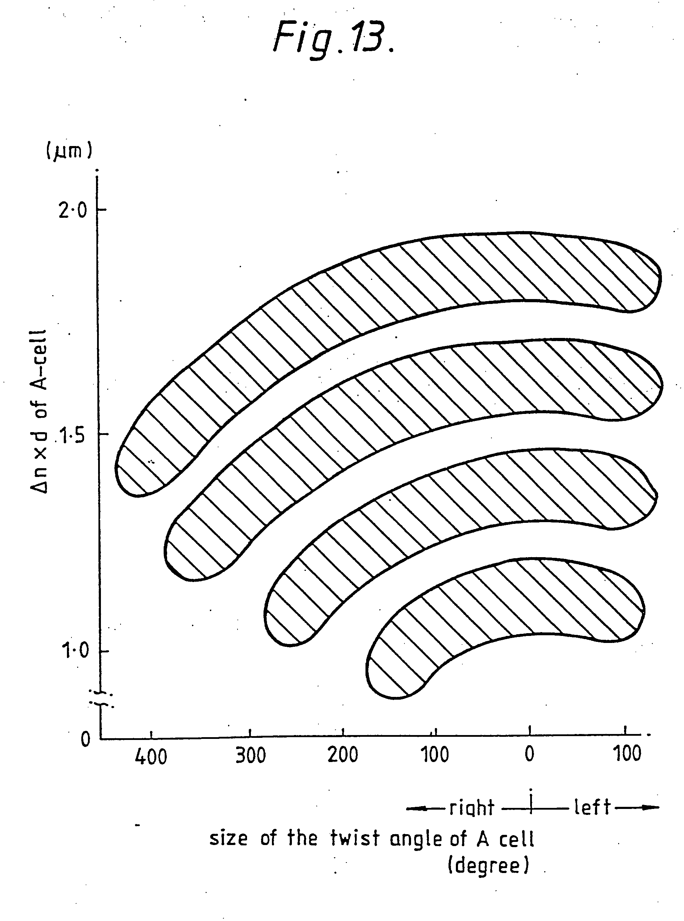

In Figure 2, it is defined that the twist angle 20 of the liquid crystal of the B-cell is about 200° to the left direction, Δn x d is about 1.5µm, the angle 19 is about 90°, the angle 17 is between 30° and 60°, and the angle 21 is between 30° and 60°. When the twist angle 18 and Δn x d of the liquid crystal of the A-cell are defined as the region which is marked with the oblique lines as shown in Figure 13, a liquid crystal display device can be obtained wherein the external spectrum of the liquid crystal display device becomes white in colour in the "OFF" state, whilst the same becomes black in colour in the "ON" state.

### EXAMPLE 12

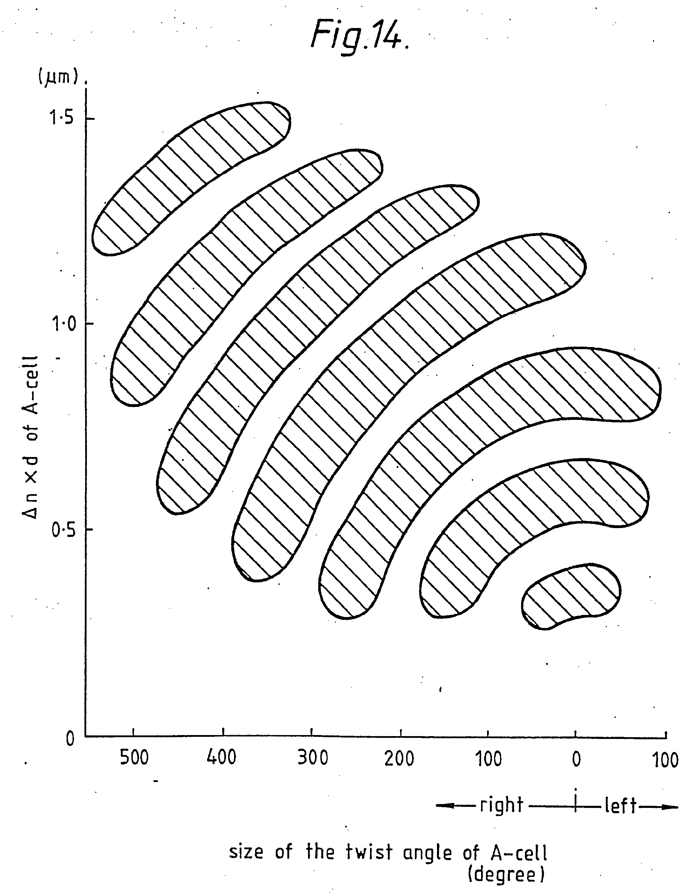

In Figure 2, it is defined that the twist angle 20 of the Liquid crystal of the B-cell is about 350° to the left direction, Δn x d is about 0.9 µm, the angle 19 is about 90°, the angle 17 is between 30° and 60°, and the angle 21 is between 30° and 60°. When the twist angle 18 and Δn x d of the liquid crystal of the A-cell are defined as the region which is marked with the oblique lines as shown in Figure 14, a liquid crystal display device can be obtained wherein the external spectrum of the liquid crystal display device becomes white in colour in the "OFF" state, whilst the same becomes black in colour in the "ON" state.

### EXAMPLE 13

In Examples 1 to 12, the same effect can be obtained by a method in which the lower substrate 4 of the A-cell and the upper electrode substrate 7 of the B-cell as shown in Figure 1 are replaced by one substrate.

### EXAMPLE 14

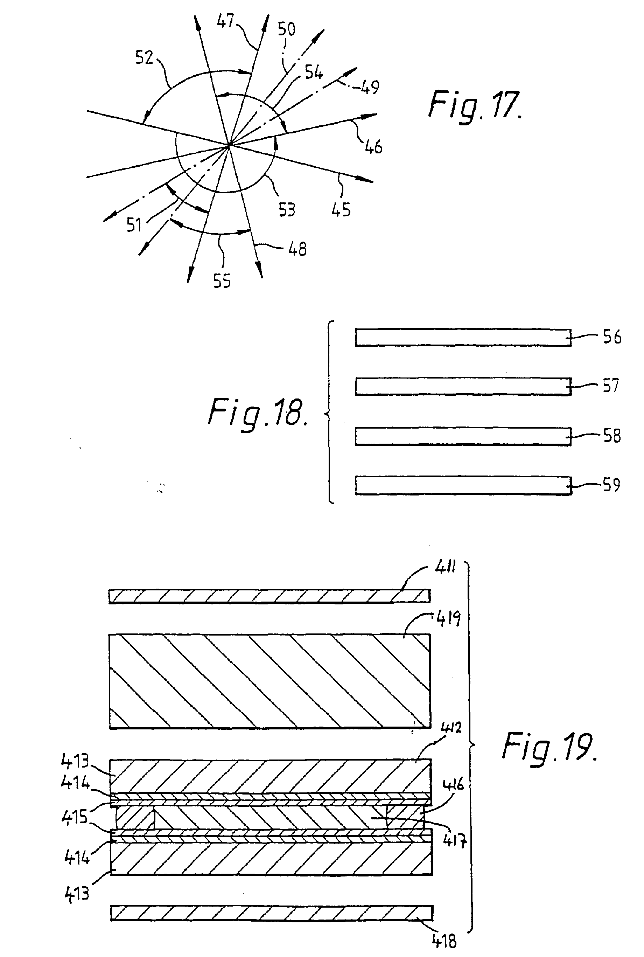

In Figure 15, there is shown an upper polariser 22, an upper A-cell 23, a B-cell 24, a lower A-cell 25 and a lower polariser 26. Figure 15 also shows an upper substrate 27 of the upper A-cell, a liquid crystal 28 of the upper A-cell, a lower substrate 29 of the upper A-cell, an upper electrode substrate 30 of the B-cell, a liquid crystal 31 of the B-cell, a lower electrode substrate 32 of the B-cell, an upper substrate 33 of the lower A-cell, a liquid crystal 34 of the lower A-cell, and a lower substrate 35 of the lower A-cell. In the structure of the liquid crystal display device of Figure 15, the liquid crystal molecules of the upper A-cell 23 and the lower A-cell 25 are twisted to the right direction. The liquid crystal molecule of the B-cell 24 is twisted to the left direction. The angle which is formed by the twist angle of the liquid crystal molecule of the upper A-cell 23 added to the twist angle of the liquid crystal molecule of the lower A-cell 25 is defined as the twist angle of the total A-cell. The Δn x d which is formed by the Δn × d of the liquid crystal layer of the upper A-cell 23 added to the Δn x d of the Liquid crystal layer of the lower A-cell 25 is defined as the Δn x d of the total A-cell. Where the twist angle and Δn x d of the total A-cell are applied for the conditions of Examples 1 to 12, the same effect as that in Examples 1 to 12 can be obtained.

### EXAMPLE 15

In the structure according to Example 14, the lower substrate 29 of the upper A-cell and the upper electrode substrate 30 of the B-cell are replaced by one substrate. Further, the lower electrode substrate 32 of the B-cell and the upper substrate 33 of the lower A-cell are replaced by one substrate. The resulting structure can be easy to produce and the same effect as that in Example 14 can be obtained.

### EXAMPLE 16

In Examples 1 to 15, it is defined that the temperature at the point of nematic-isotropic (NI) of the liquid crystal of the A-cell is T_{A} (k), and the temperature at the point of NI of the liquid crystal of the B-cell is T_{B} (k). A liquid crystal is employed whose relationship between T_{A} and T_{B} is satisfied by the condition 0.86 ≤ T_{A}/T_{B} ≤ 1.15. As a result, although Δn x d of the liquid crystal layer of the B-cell and the A-cell is changed by the temperature change, there is no change in the external colour of the liquid crystal display device.

### EXAMPLE 17

In Examples 1 to 16 a liquid crystal whose dielectric anisotropy Δε is positive is employed as the liquid crystal of the A-cell. Thus the orientation of the liquid crystal molecules of the A-cell gets confused by the static electricity from the outside, thereby causing an uneven colour in the external appearance of the liquid crystal display device. Therefore, a liquid crystal whose dielectric anisotropy Δε is negative is employed as the liquid crystal of the A-cell. There results an improved liquid crystal display device which does not have the uneven colour even in the presence of static electricity from the outside.

### EXAMPLE 18

In Examples 1 to 16 electrodes are attached to the inside of the upper and lower substrates of the A-cell, and a liquid crystal whose dielectric anisotropy is positive is employed as the liquid crystal of the A-cell. Thereby, although the colour in the external appearance of the liquid crystal display device changes by the temperature change, it is possible to overcome the colour change by applying a voltage between electrodes which are attached to the upper and lower substrates of the A-cell.

### EXAMPLE 19

In Examples 1 to 18, except for Examples 13 and 15, the A-cell is optically adhered with the B-cell in order to prevent reflection of light on the surface of the substrate adjacent to the A-cell and the B-cell. Polyvinyl butyral film which is embossed is utilised as an adhesive layer, and adhesion is achieved by the application of heat or pressure. A heat-cured epoxy or uletan adhesive can be also utilised. Further, acrylic ultraviolet adhesive can be utilised. Thus the A-cell is adhered to the B-cell such as to reduce the light reflection on the boundary surface of both cells.

### EXAMPLE 20

Figure 16 shows a structure employing a film state polymer layer (hereinafter referred to as A-film) as the optically anisotropic substance. In Figure 16, there is shown an upper polariser 36, an upper A-film 37, a B-cell 38, a lower A-film 39, and a lower polariser 40. Figure 16 also shows an upper electrode substrate 41 of the B-cell, a Liquid crystal 42 of the B-cell, and a lower electrode substrate 43 of the B-cell. Figure 17 shows the relationship of each axis of a liquid crystal display device employing the A-film. In Figure 17, there is shown a rubbing direction 45 of the upper electrode substrate of the B-cell, a rubbing direction 46 of the lower electrode substrate of the B-cell, a direction 47 of the optical axis of the upper A-film, a direction 48 of the optical axis of the lower A-film, a direction 49 of the polarising axes (absorption axes) of the upper polariser 36, a direction 50 of the polarising axes (absorption axes) of the lower polariser 40, an angle 51 between the direction 49 of the polarising axes (absorption axes) of the upper polariser and the direction 47 of the optical axis of the upper A-film, an angle 52 between the direction 47 of the optical axes of the upper A-film and the rubbing direction 45 of the upper electrode substrate of B-cell, a twist angle 53 of the liquid crystal molecule of the B-cell, an angle 54 between the rubbing direction 46 of the lower electrode substrate of B-cell and the direction 48 of the optical axis of the lower A-film, an angle 55 between the direction 48 of the optical axis of the lower A-film and the direction 50 of the polarising axes (absorption axes) of the lower polariser 40. In Figure 16, it is defined that the angle 51 is about 40°, the angle 52 is about 90°, the twist angle 53 is about 200° to the left direction, and the angle between the rubbing direction 46 of the lower electrode substrate of the B-cell 38 and the direction 50 of the polarising axes (absorption axes) of the lower polariser 40 without the lower A-film 39 is about 40°. The product of the birefringence Δnf and the thickness of the upper A-film √df, Δnf x df, is about 0.55µm.

n x d of the Liquid crystal layer of the B-cell is about 0.9µm. In this case, the liquid crystal display device becomes white in colour in the "OFF" state, whilst the same becomes black in colour in the "ON" state.

The A-film may be a stretched film such for example as diacetyl cellulose, polyethylene terephthalate, cellulose diacetate, polyvinyl alcohol, polyamide, polyether sulfon, acryl, polysulfon, polyimide and polyolefin.

### EXAMPLE 21

In Figure 17, it is defined that the angle 51 is about 50°, the angle 52 is about 90°, the twist angle 53 of the liquid crystal molecule of the B-cell is about 200° to the left direction, the angle 54 is about 90°, the angle 55 is about 50°. Δn x d which is Δn x d of the upper A-film added to Δn x d of the lower A-film, is about 0.6 µm, whilst Δn x d of the liquid crystal layer of the B-cell is about 0.9µm. In this case, the same effect as that in Example 20 can be obtained.

### EXAMPLE 22

Referring to Figure 17, the structure without the lower A-film is defined. It is defined that Δn x d of the upper A-film is about 0.65µm, the angle 51 is about 50°, the angle 52 is about 90°, the twist angle 53 of the liquid crystal molecule of the B-cell is about 250° to the left direction, the angle between the rubbing direction 46 of the lower electrode substrate of B-cell and the direction 50 of the polarising axes (absorption axes) of the lower polarisers is about 50°, and Δn x d of the liquid crystal of the B-cell is about 0.9µm. In this case, the liquid crystal display device becomes white in colour in the "OFF" state, whilst the same becomes black in colour in the "ON" state.

### EXAMPLE 23

In Figure 17, the structure without the lower A-film is defined. The upper A-film is composed with eleven films whose optical axes are twisted to the right direction through 15° from top to bottom. The total amount of Δn x d of the eleven films is about 0.7µm. Further, an angle between the polarising (absorption axes) of the upper polariser and the direction of the optical axis of the uppermost film of the upper A-film is represented as about 50°, an angle between the direction of the optical axis of the lower film of the upper A-film and the rubbing direction of the upper electrode substrate of the B-cell is represented as about 90°, and an angle between the rubbing direction of the lower electrode substrate of the B-cell and the polarising axes (absorption axes) of the lower polariser is represented as about 40°. The twist angle 53 of the liquid crystal molecule of the B-cell is about 200° to the left direction, and the Δn x d of the liquid crystal of the B-cell is about 0.9 µm. In this case, the Liquid crystal device becomes white in colour in the "OFF" state, whilst the same becomes black in colour in the "ON" state.

### EXAMPLE 24

In Figure 16, the structure without the Lower A-film 39 is defined. It is defined that Δn x d of the upper A-film 37 is about 0.65µm to 0.85µm, the angle 51 is about 35° to 55°, the angle 52 is about 80° to 100°, the twist angle 53 of the Liquid crystal molecule of the B-cell is about 200° to the left direction, an angle between the rubbing direction 46 of the lower electrode substrate of the B-cell and the direction 50 of the polarising axes (absorption axes) of the Lower polariser is about 35° to 55°, and Δn x d of the liquid crystal of the B-cell is about 0.9µm. In this case, the liquid crystal display device becomes white in colour in the "OFF" state, whilst the same becomes black in colour in the "ON" state.

### EXAMPLE 25

In Figure 16, the structure without the lower A-film 39 is defined. It is defined that Δn x d of the upper A-film 37 is about 0.25µ m to 0.45µm, the angle 51 is about 35° to 55°, the angle 52 is about 80° to 100°, the twist angle of the liquid crystal molecule of the B-cell is about 200°.to the left direction, an angle between the rubbing direction 46 of the lower electrode substrate of the B-cell and the direction 50 of the polarising axes (absorption axes) is about 35° to 55°, and Δn x d of the liquid crystal of the B-cell is about 0.9µm. In this case, the liquid crystal display device becomes white in colour in the "OFF" state, whilst the same becomes black in colour in the "ON" state.

### EXAMPLE 26

In Figure 16, the structure without the lower A-film 39 is defined. It is defined that Δn x d of the upper A-film 37 is about 0.4 µm to 0.6 µm, the angle 51 is about 35° to 55°, the angle 52 is about 80° to 100°, the twist angle 53 of the liquid crystal molecule of the B-cell is about 180° to the left direction, the angle between the rubbing direction 46 of the lower electrode substrate of the B-cell and the direction 50 of the polarising axes (absorption axes) of the lower polariser is about 35° to 55°, and Δn x d of the liquid crystal of the B-cell is about 0.9µm. In this case, the liquid crystal display device becomes white in colour in the "OFF" state, whilst the same becomes black in colour in the "ON" state.

### EXAMPLE 27

In Figure 16, the structure without the lower A-film 39 is defined. It is defined that Δn x d of the upper A-film 37 is about 0.5 to 0.7 µm, the angle 51 is about 35° to 55°, the angle 52 is about 80° to 100°, the twist angle 53 of the liquid crystal molecule of the B-cell is about 180° to the left directioh, the angle between the rubbing direction 46 of the lower electrode substrate of the B-cell and the direction 50 of the polarising axes (absorption axes) is about 35° to 55°, and Δn x d of the liquid crystal of the B-cell is about 1.0. In this case, the liquid crystal display device becomes almost white in colour in the "OFF" state, whilst the same becomes almost black in colour in the "ON" state.

### EXAMPLE 28

In Figure 16, the structure without the lower A-film 39 is defined. It is defined that Δn x d of the upper A-film 37 is about 0.5 to 0.6 µm, the angle 51 is about 35° to 55°, the angle 52 is about 80° to 100°, the twist angle 53 of the liquid crystal molecule of the B-cell is about 230° to the left direction, the angle between the rubbing direction 46 of the lower electrode substrate of the B-cell and the direction 50 of the polarising axes (absorption axes) of the lower polariser is about 35° to 55°, and Δn x d of the liquid crystal of the B-cell is about 0.9 µm. In this case, the liquid crystal display device becomes almost white in colour in the "OFF" state, whilst the same becomes almost black in the "ON" state.

### EXAMPLE 29

In Examples 20 to 28, a structure is defined which is formed by the A-film and the polariser being in one body. Figure 18 shows schematically a structure where the A-film and the polariser are in one body. In Figure 18, there is shown a protective film 56 of the polariser, a polariser 57, an A-film 58 and a protective film 59 of the polariser. As shown in Figure 18, the A-film which is incorporated with the polariser, is utilised in the liquid crystal display device, thereby to obtain the same effect.

### EXAMPLE 30

In Examples 1 to 29, even although a reflector is provided in the outside of either the upper or the lower polariser, a reflective display device giving monochrome display can be obtained.

It will be appreciated from the above description with reference to the drawings and the Examples that the present invention provides an excellent liquid crystal display device giving monochrome display, wherein the liquid crystal display device becomes white in colour in the "OFF" state, and black in colour in the "ON" state.

Figure 3 shows the relationship of each axis of the liquid crystal display device according to prior art and the direction of the polarising axes (absorption axes) of the polariser. In Figure 3, there is shown a rubbing direction 100 of the upper electrode substrate of the liquid crystal cell, a rubbing direction 101 of the lower electrode substrate of the liquid crystal cell, a direction 102 of the polarising axes (absorption axes) of the upper polariser, a direction 103 of the polarising axes (absorption axes) of the lower polariser, a twist angle 104 of the liquid crystal molecule of the liquid crystal cell, an angle 105 between the polarising axes (absorption axes) of the upper polariser and the rubbing direction 100 of the upper electrode substrate of the liquid crystal cell, and an angle 106 between the rubbing direction 101 of the lower electrode substrate and the polarising axes (absorption axes) of the lower polariser.

Figure 4 shows the external appearance of the spectrum of the liquid crystal display device in the case where the twist angle 104 is about 200°, the angle 105 is about 50°, the angle 106 is about 50°, and Δn x d of the liquid crystal is about 0.9 µm in Figure 3. In Figure 4, the curve I is a state of applying the voltage, and the curve II is a spectrum at the time when the selecting voltage is applied by the 1/100 duty driving.

Before referring to Figures 19 to 39, reference will again be made to the super twisted nematic Liquid crystal display device as disclosed in Japanese Laid Open Patent Specification No. 60-50511. This known super twisted nematic liquid crystal display device has, as mentioned above, a twist angle of the liquid crystal molecule of more than 90° and a pair of polarisers provided on the upper and lower liquid crystal cells. Also as mentioned above, an angle between the polarising axes (absorption axes) and the axis direction of the liquid crystal molecule adjacent to the electrode substrate thus falls within a range of between 30° and 60° and because of birefringence, when the liquid crystal display device is in the state of not applying voltage, its appearance is not white and instead its appearance becomes green to reddish yellow. Also, when the liquid crystal device is in the state of applying voltage, its appearance is not black but instead its appearance becomes blue.

Figure 34 shows an example for driving the liquid crystal display device according to the present invention.

Figure 35 is a schematic view of the prior art super twisted nematic liquid crystal display device of Japanese Laid Open Patent Specification No. 60-50511. In Figure 35, 171 is an upper polariser, 172 is a Liquid crystal cell, 173 is a substrate, 174 is a transparent electrode, 175 is a orientation film, 176 is a spacer, 177 is a liquid crystal, and 178 is a lower polariser.

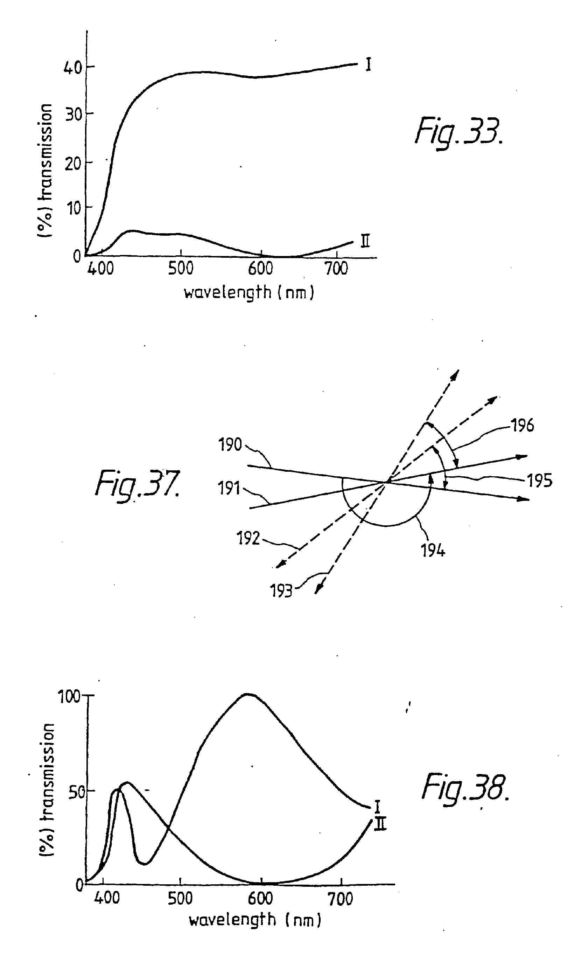

Referring now to Figure 37, there is shown the relationship between the liquid crystal cell of the prior liquid crystal display device and the direction of the polarising axes (absorption axes) of the polariser. In Figure 37, 190 is a rubbing direction of the upper electrode substrate of the Liquid crystal cell, 191 is a rubbing direction of the lower electrode substrate of the Liquid crystal cell, 192 is a direction of the polarising axes (absorption axes) of the upper polariser, 193 is a direction cf the polarising axes (absorption axes) of the lower polariser, 194 is a size of the twist angle of the Liquid crystal molecule of the liquid crystal cell, 195 is an angle which is formed by the rubbing direction 190 of the upper electrode substrate and the direction 192 of the polarising axes (absorption axes) of the upper polariser and 196 is an angle which is formed by the rubbing direction 191 of the lower electrode substrate and the direction 193 of the polarising axes (absorption axes) of the lower polariser.

Figure 38 shows the external appearance spectrum of the Liquid crystal display device in the ease where the angle 194 is about 200°, the angle 195 is about 50°, the angle 196 is about 50°, and the further n x d of the Liquid crystal is about 0.9 m in Figure 37. In Figure 38, the curve I shows the spectrum of the off state pixel transmission and II shows the spectrum of on state pixel transmission. Each pixel is driven by conventional X-Y matrix multiplex driving. The duty ratio of the multiplex driving is, in this case, 1/100. The "off state" is defined as the state of no voltage application or, even under the voltage application, the state where Little orientation change in the Liquid crystal Layer takes place. The "on state" is defined as the state where voltages, enough to cause orientation and optical-transmission change, are applied. It will be noticed from Figure 38 that I is "bright" and II is "dark". Thus, I and II can visually be distinguished.

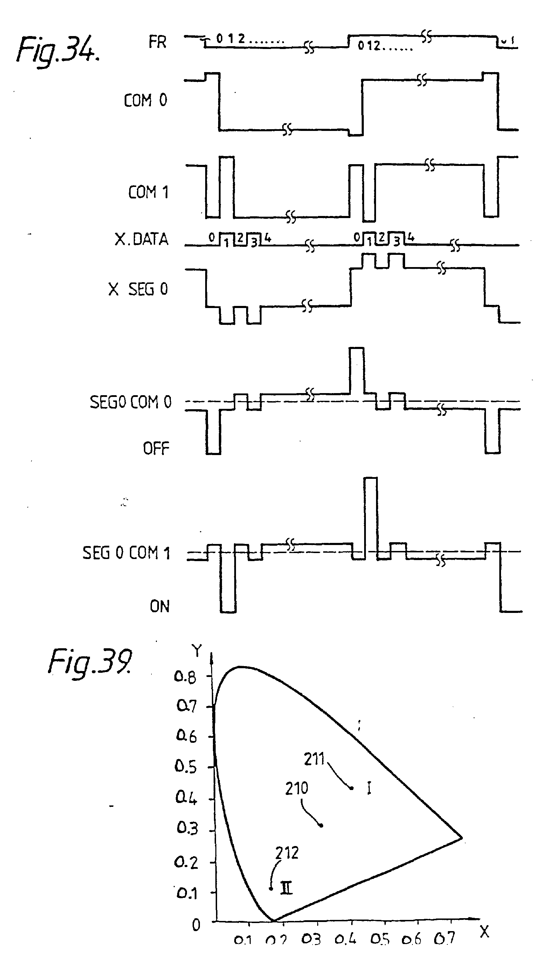

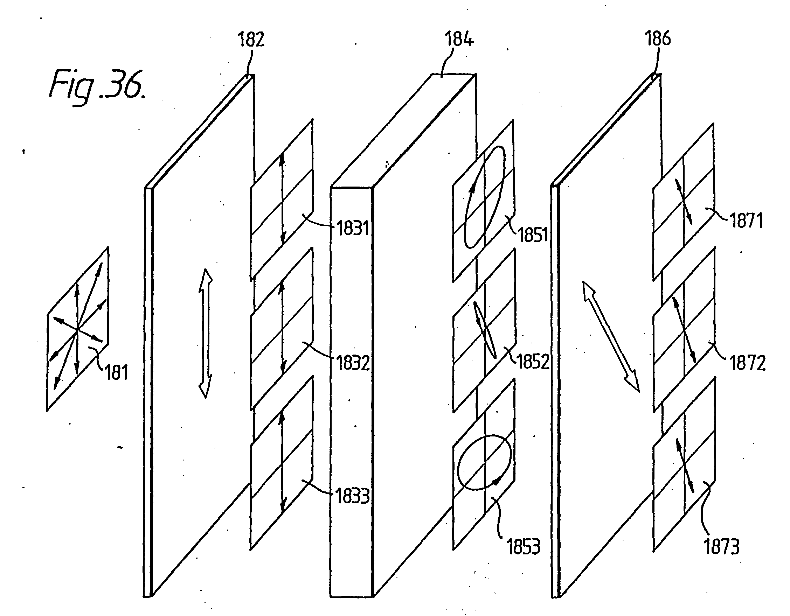

Figure 39 is the plot of I and II in Figure 38 on the colour coordinates (CIE 1931, i.e. Commission Internationale de Enluminure by which a trichromatic specification was decided in 1931). Figure 39 shows that the off state I is yellow and the on state II is blue.

As mentioned above, according to the prior art super twisted nematic Liquid crystal display device of Japanese Laid Open Patent Specification No. 60-50511, the colour of the external appearance of the Liquid crystal display device becomes green, yellowish green, yellow or reddish yellow in the positive display, and at the time when the selecting voltage is applied, the colour becomes blue or dark blue. The colour of the liquid crystal display device becomes dark blue in the negative display state and, when the selecting voltage is applied, the colour becomes yellow. As previously stated, these colours are not desirable colours as the display colour of the display device. More specifically, white and black are the most suitable display colours for the display device.

In addition to the requirement for a liquid crystal display device having a "black and white" display, when it is desired to make a colour display, especially a full colour display, in combination with a colour filter, it is very important for display performance as to whether the displaying mode is "black and white" or not. In the case of the above mentioned prior super twisted nematic liquid crystal display device, the spectrum of which is shown in Figure 38, it is difficult to display red and blue as bright as green. In one aspect of this invention, the present invention aims to deat with this problem. Thus, more specifically, this invention aims in the said one aspect to provide the improved liquid crystal display device having the function of the black and white display both in the positive mode or negative mode, and also to enable the provision of a colour display having a good colour performance.

Figure 19 is given as a typical example of a display that has the required black and white display and the required colour display. In Figure 19, there are shown linear polarisers 411, 418, a liquid crystal cell 412 and an optically anisotropic substance 419. Also shown in Figure 19 is a substrate 413, a transparent electrode 414, an orientation film 415, a spacer 416 and a liquid crystal 417. The spacer 416 is for providing a desired space between substrates. The polarisers, liquid crystal materials, way of giving orientation to the liquid crystal layer, way of driving etc. used in Figure 19 are the same as the prior super twisted nematic liquid crystal display device of Japanese Laid Open patent specification no. 60-50511 and prior twisted nematic liquid crystal display devices.

Figure 33 is the spectrum of a commercially available polariser which is called LLC2-82-18 and which is manufactured by Sanritsu Electronics Co., Japan. This is an example of a polariser. In Figure 33, represents a parallel state and II represents a cross nicol state.

The liquid crystal material used in the present invention may be a nematic liquid crystal which has a positive dielectric anisotropy. One example of such a material is the material which is known as SS-4008 and which is manufactured by Chisso Co. Another example of such a material is shown below:

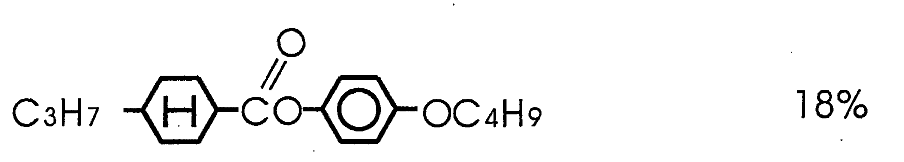

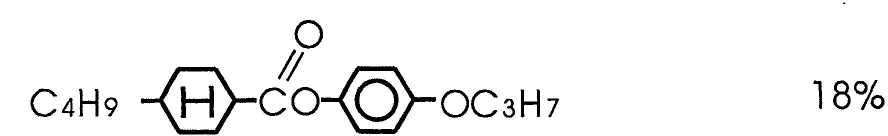

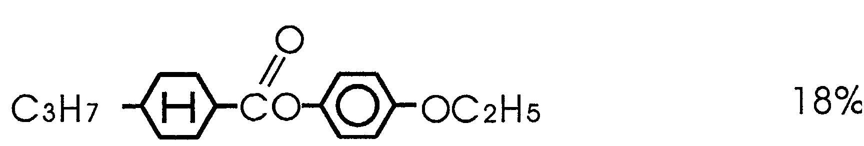

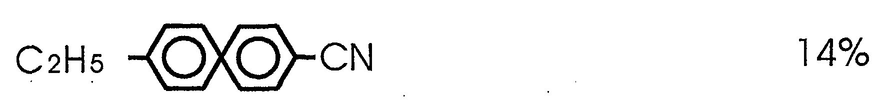

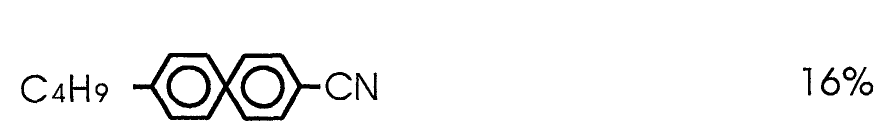

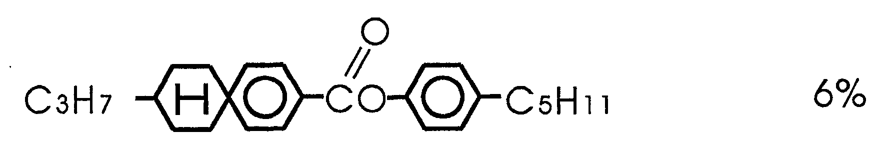

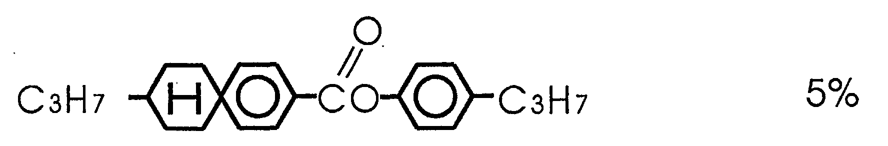

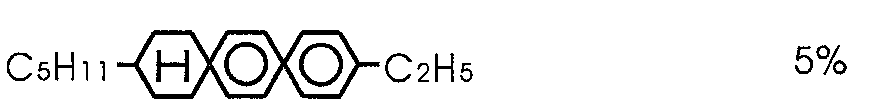

In order to keep the twisted structure stable, it is desirable to dope chiral compounds in the liquid crystal mixture. Preferred examples of such compounds are CB-15 (manufactured by British Drug Houses) for right handed helix, and S-811 (manufactured by Merck) for left handed helix.

Referring again to Figure 19, the optically anisotropic substance 419 is the key component. Liquid crystal compounds, uniaxially expanded polymer film, polymer liquid crystal film, and liquid crystal compounds in the polymer matrix are usable as the optically anisotropic substance. These examples usually show uniaxial optical anisotropy. Substances that show biaxial optical anisotropy can be used in some cases.

Nematic liquid crystal, cholesteric liquid crystal and smectic liquid crystal can be used for the optically anisotropic substance. Preferably, the same nematic liquid crystal compound is employed for liquid crystal cell 412 in Figure 19. This is because the mismatching of birefringence dispersion between the liquid crystal layer and the optically anisotropic substance layer can be overcome.

Examples of uniaxially expanded polymer film are polyvinyl alcohol, polyester, polyethylene, polyetheramide and polysulfone. An example of polymer liquid crystal film is the polymer blend of polypeptide and polymethacrylate. Other polymer liquid crystals than polypeptide can be used. Polymer liquid crystals that show a cholesteric phase are preferable. One such example is as given as follows:

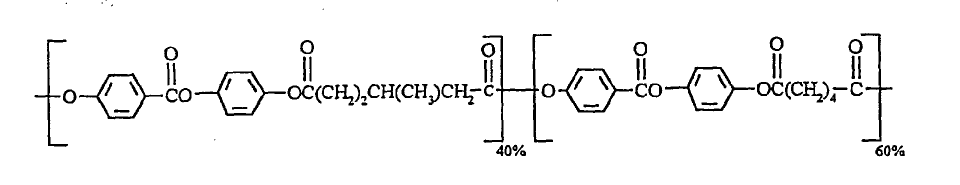

Examples of liquid crystal compounds in the polymer matrix are composed by the following components. Examples of liquid crystal compounds are a blend of phenyl cyclohexane, cyclohexyl cyclohexane, biphenyl components and chiral components. Examples of polymer matrix materials are polymethylmethacrylate, polyaceticvinyl and polyamide. A preferred example of a liquid crystal compound in the polymer matrix is as follows:

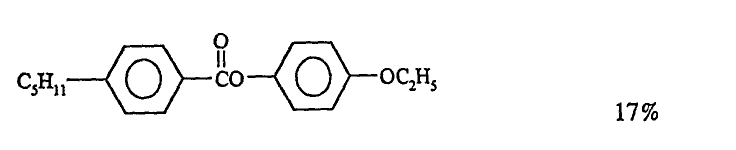

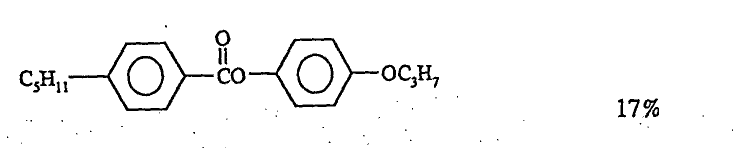

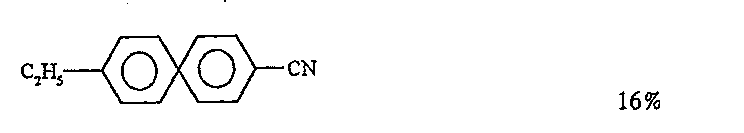

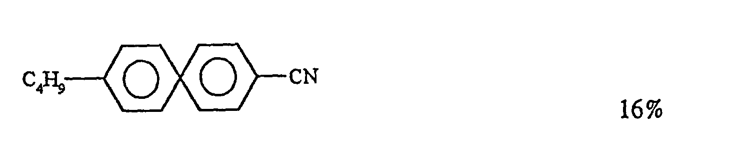

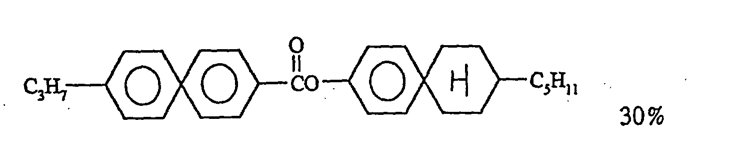

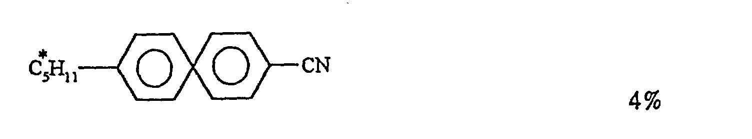

It will be appreciated that, in order to be free of a colouring state, the present invention employs a display having at least two layers of an optically anisotropic substance. There will now be given a detailed explanation of the function of the layers of optically anisotropic substance.

Figure 36 is a schematic drawing to explain the "off state" optical characteristics of the prior super twisted liquid crystal display device disclosed in Japanese Laid Open Patent Specification No.60-50511(STN-LCD). In Figure 36, 181 is the incident light. Generally 181 is the natural light, so that it contains all wave lengths in the visible region. The polarising direction of each light is random. After passing through a linear polariser 182, the incident light 181 becomes a set of Linearly polarised lights 1831, 1832, 1833 and so on. 1831, 1832 and 1833 mean the polarised Light whose wave lengths are 450 nm, 550 nm and 650 nm respectively. It is obvious that the set of lights contain other wave length light than 1831, 1832 and 1833. Here these three wave lengths are shown as being representative of blue, green and red. A set of lights 1831, 1832 and 1833 passes through a liquid crystal cell 184. The liquid crystal in the liquid crystal cell is the optically uniaxial anisotropic media and ,in the liquid crystal cell, it forms a twisted orientation. How they change their polarising state when the lights 1831, 1832 and 1833 pass through the above mentioned liquid crystal Layer, they change their polarising state is precisely predictable by way of calculations mentioned hereinbelow. For example, in the case of the STN-LCD, the spectrum of which is shown in Figure 38, the polarising states become those shown as 1851, 1852 and 1853 respectively. Generally speaking, after passing through the anisotropic media, the linearly polarised light becomes elliptically polarised Light just like 1851, 1852 and 1853. The polarised lights 1851, 1852 and 1853 show that there is a difference of polarising state in accordance with the wave length. These polarised Lights 1851, 1852 and 1853 finally passes through a linear polariser 186. It will easily be understood that, after passing through the polariser 186, each Light becomes those shown as 1871, 1872 and 1873 respectively. This is because only the component of each Light, which corresponds to the polarising direction of the polariser 186, can pass through. It can be observed that, in this case, the intensity of green light (550 nm wave length) is stronger than that of blue (450 nm) and red (650 nm). The spectral expression of this result is the "I" in Figure 38. Figure 39 is the plot of the same result on the colour co-ordinate. Thus, the prior STN-LCD cannot help avoiding a coloured appearance because of the optical anisotropy (birefringence) of the liquid crystal layer. In Figure 39 the white point is indicated at 210 and measured points at 211 and 212.

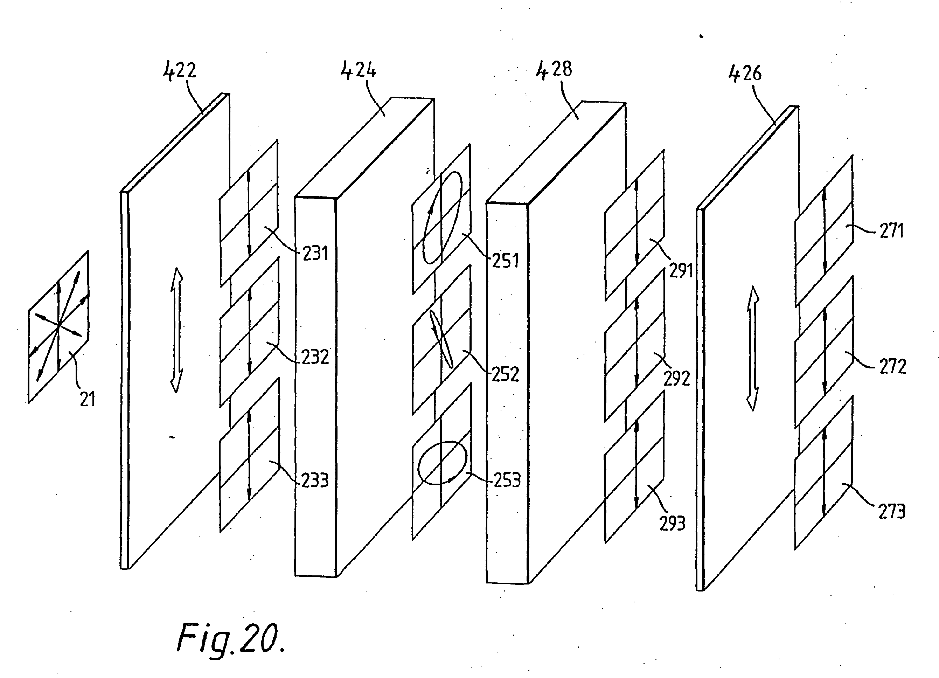

Figure 20 is a schematic drawing to explain the "off-state" optical characteristics.

Comparing Figure 20 with Figure 36, the difference is that, the device corresponding to Figure 20 has the additional component 428 which is the optically anisotropic substance. For the convenience of explanation, the conditions of each component, except the optically anisotropic substance 428 and the polariser 426, are taken to be the same as that in the case of prior STN-LCD shown in Figure 36, and whose spectrum is shown in Figure 38. Thus, the polarising state of each wave length light 251, 252 and 253 is exactly the same as 1851, 1852 and 1853 in Figure 36 respectively. Each elliptically polarised light 251, 252 and 253 passes through the optically anisotropic substance 428. This optically anisotropic substance 428 functions to cancel the difference of polarised states that are caused by passing through the liquid cell 424. In order to make it clear, the optical function of the liquid crystal cell 424, is defined as "M". The polarised states of the lights 231, 232 and 233 are defined as "p". There is then obtained the formula:$\text{P' = M * P}$ where P' means the polarised states of the lights 251, 252 and 253.

If the optical function of the optically anisotropic substance 428 is given as "M⁻¹", where "M⁻¹" means the inverse transformation of "M", then there may be obtained the formula:${\text{P" = M}}^{\text{-1}} \text{* p'}$ where P'' means the polarised states of the lights 291, 292 and 293. From formulae (7) and (8), there may be obtained the formula:${\text{P" = M}}^{\text{-1}} \text{* M * P}$ It is clear that:${\text{M}}^{\text{-1}} \text{* M = I}$ So there is obtained:$\text{P'' = P}$

Formula (11) means that the polarised states of the lights 231, 232 and 233 (P) are exactly the same as 291, 292 and 293 (P''). Since the lights 231, 232 and 233 are the states just after passing through the linear polariser 422, so these lights are linearly polarised and their polarising directions are the same. Thus the lights 291, 292 and 293 are also linearly polarised and their polarising directions are the same. If the direction of the polariser426 corresponds the polaricing directions of the lights 291, 292 and 293 these lights can pass through the polariser 426 without change. So the lights 271, 272 and 273 are exactly the same as 291, 292 and 293. In this case, the spectrum of the lights (271, 272, 273 and other wave length lights) is identical to the spectrum of the polariser used and shown in Figure 33 I. (For the present purposes, the absorbance and reflectance by the liquid crystal cell 424 and the optically anisotropic substance 428 can be ignored). A colourless polariser can easily be chosen and used. Thus, the liquid crystal display device can be free of colouring.

The question may still be raised of whether the condition of the optically anisotropic substance, that can make the inverse transformation against the transformation by the liquid crystal cell, really exists. The answer to this question is in the affirmative and the Applicant has found that such a condition of the optically anisotropic substance exists. Furtheraore, such a condition exists, irrespective of what the condition of the Liquid crystal cell is.

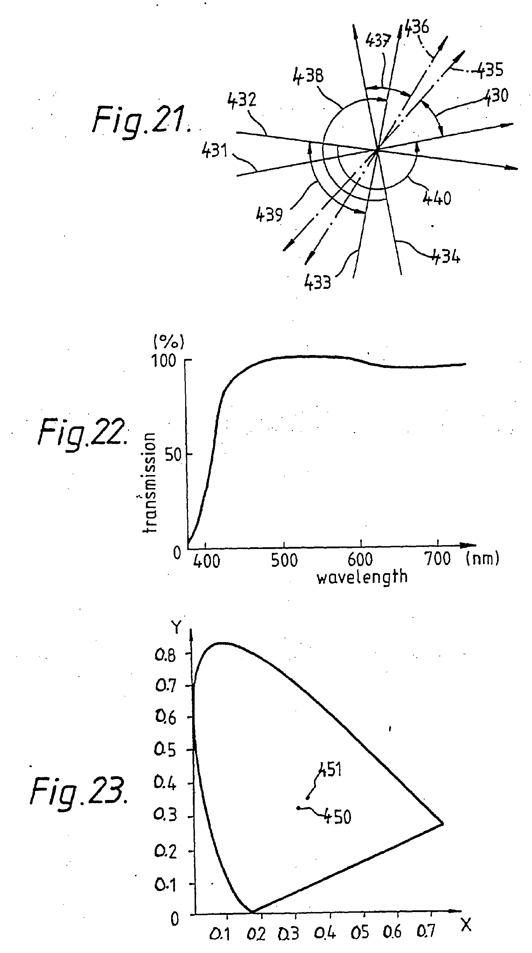

In order to explain the above condition, the relationship between the liquid crystal cell, the polarised substrate, and the optically anisotropic substance in the liquid crystal display device is shown in Figure 21. Figure 21 corresponds to the Liquid crystal display device as shown in Figure 19. In Figure 21,431 is a rubbing direction of the lower electrode substrate of the liquid crystal cell, 432 is a rubbing direction of the upper electrode substrate of the liquid crystal cell,433 is a direction of optical axis of the surface which is opposed to the Liquid crystal cell of the optically anisotropic substance, 434 is a direction of the optical axis of the surface which is opposed to the polarised substrate of the optically anisotropic substance, 435 is a direction of polarising axes (absorption axes) of the lower polarised substrate, 436 is a direction of polarising axes (absorption axes) of the upper polarised substrate, 43.7 is an angle between the direction of polarising axes of the upper polarised substrate 436 and the direction of optical axis of the optically anisotropic substance 434,438 is an angle between the direction of optical axis of the optically anisotropic substance433 and 434,439 is an angle between433 and432,440 is a size of the twist angle of the Liquid crystal Layer in the Liquid crystal cell, and 430 is an angle between the rubbing direction of the Liquid crystal cell 431 and the direction of polarising axes of the Lower polarised substrate 435, respectively.

The conditions of the liquid crystal cell are made to be the same as in the prior STN-LCD as shown in the spectrum of Figure 38, namely, the twist angle of the liquid crystal layer in the liquid crystal cell 440 is made to be about 200°, and Δn x d is made to be about 0.9 µ m. So, the whitening under these conditions may be explained as follows. In the case where there is no optically anisotropic substance, the spectrum becomes the same as shown in Figure 38, namely, it enters into the colouring state. However, in the case where, for example, the liquid crystal cell is used as the optically anisotropic substance, wherein the twist angle of the liquid crystal layer 438 is -200° (namely, the helix is opposite with respect to the liquid crystal cell for displaying, and the absolute value of the twist angle is equal to the liquid crystal cell) and Δn x d is about 0.9 µm, as shown in Figure 22, the spectrum in the off state becomes approximately flat. The other appertaining conditions are that 437 is 45°, 430 is 45°, and 439 is 90°. The spectrum of Figure 22, which is plotted on a chromaticity diagram is shown in Figure 23. It is clear that an approximately white colour can be obtained in comparison with the prior method as shown in Figure 38. In Figure 23 the white point is indicated at 450 and the measured value is indicated at 451.

The above shows that the condition of the optically anisotropic substance that can make the inverse transformation against that of the liquid crystal cell exists. So Figure 20 is not imaginary, but it is reality. So the question may then arise as to what kind of conditions the optically anisotropic substance must satisfy. The answers are as follows:
(1) the product of birefringence (Δn) and layer thickness (d) Δn*d for both the liquid crystal cell and the optically anisotropic substance is the same, viz:$\text{(Δn*d) LC cell = (Δn*d) optically anisotropic substance}$
(2) the twist angle of the liquid crystal layer in the liquid crystal cell is the same as the twist angle of the optically anisotropic substance, and the twist directions of both of them are opposed to each other.
(3) the angle 439 that is the angle between the rubbing direction of the upper electrode substrate 432 and the optical axis of the optically anisotropic substance on the surface that faces the liquid crystal cell 433 is 90 degrees.

When the above three conditions are satisfied, the off state of the Liquid crystal display device is free of colouring, no matter how the value of Δn*d and the twist angle would be.

The above explanation is all for the "decolouring" of the off state. The colouring problem in the on state may also be solved. It is complicated to explain the reasons of "decolouring" in the on state. Nevertheless, the liquid crystal display device is free of colouring even in the on state.

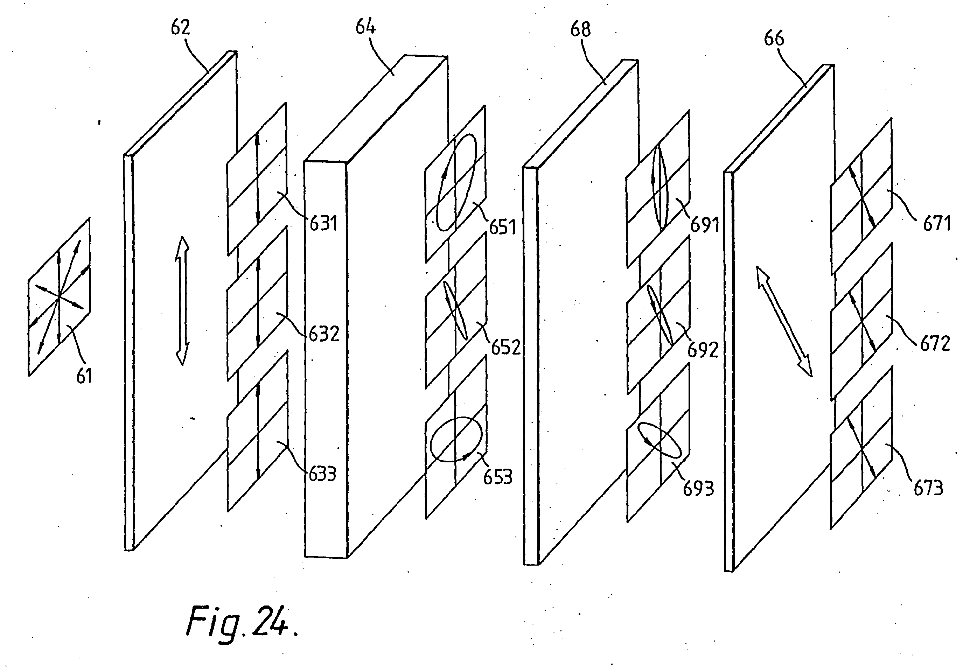

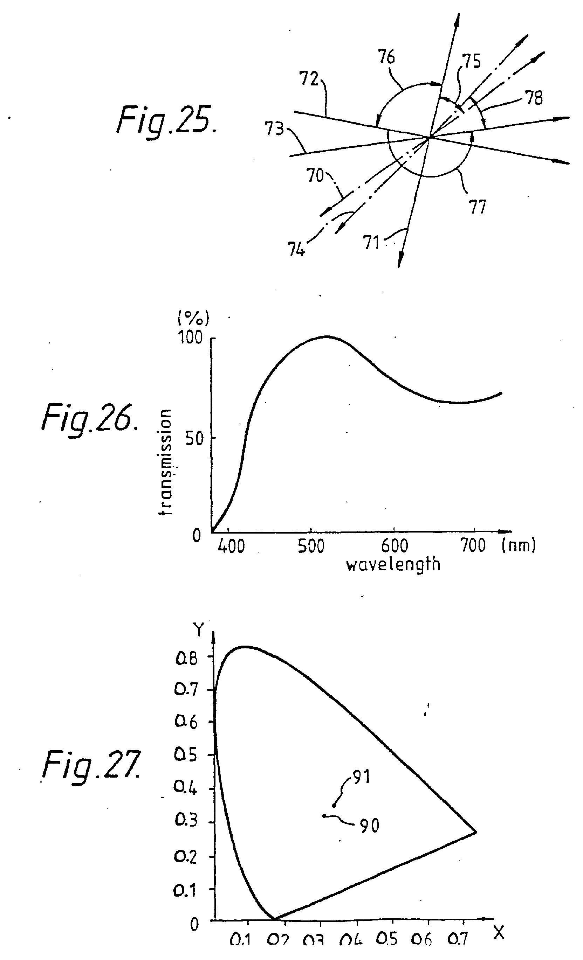

As explained above, it is necessary, for being free of colouring in the off state, to satisfy the above explained three conditions. However, in many cases, it is not necessary for decolouring to satisfy the three conditions. Figure 24 is a drawing which is given to explain such conditions. Figure 24 corresponds to Figure 20 except that the polarising states of the Lights 691, 692 and 693, those are the states after passing through the optically anisotropic substance 68, are not linearly polarised, unlike the lights 291, 292 and 293 in Figure 20. These Lights are slightly elliptically polarised and the directions of polarising axes are different. Consequently, the intensity of the lights 671, 672 and 673 show a small wave length dependency. For example, in the case of the conditions disclosed in Example 20, the spectrum of the off state is shown in Figure 26 and the plot on the colour co-ordinate is shown in Figure 27. In the conditions of Example 20, just like the lights 691, 692 and 693 in Figure 24, the polarising states after passing through the optically anisotropic substance are elliptically polarised. However, as shown in Figure 27, it has almost no colour. Thus, there exists a decolouring condition of optically anisotropic substance, even in the conditions that will not satisfy the above three conditions. In Figure 27 the white point is indicated at 90 and the measured value is indicated at 91.

Figure 25 shows the condition in the structure shown in Figure 24. Thus, Figure 25 shows the relationship between the optically anisotropic substance, the liquid crystal cell and the polariser in Example 20. In Figure 25, 70 is the direction of the polarising axis (absorption axis) of the upper polariser, 71 is the direction of the optical axis of the optically anisotropic substance, 72 is the rubbing direction of the upper electrode substrate of the liquid crystal cell, 73 is the rubbing direction of the lower electrode substrate of the liquid crystal cell, 74 is the direction of the polarising axis of the upper polariser and the direction 72 of the optical axis of the optically anisotropic substance, 76 is an angle between the direction 71 of the optical axis of the optically anisotropic substance and the rubbing direction 72 of the upper electrode substrate of the liquid crystal cell, 77 is the size of the twist of the liquid crystal layer of the liquid crystal cell, and 78 is an angle between the rubbing direction 73 of the lower electrode substrate of the liquid crystal cell and the direction 74 of the polarising axis of the lower polariser.

For several practical reasons, the conditions that will not satisfy the above three conditions are preferable. One of these reasons is that the commercially available polarisers have, more or less, colour. An example is shown in Figure 33. In Figure 33, both the spectrums of I and II are not perfectly flat. This means more or less coloured. It is possible to get a better decolouring state by choosing proper conditions of the optically anisotropic substance, other than the above three conditions. This is possible for both the on state and the off state. Another reason is the viewable angle. In some liquid crystal cell conditions, other conditions of the optically anisotropic substance is more preferable for a viewable angle than the above three conditions.

The above is an explanation of the various kinds of optically anisotropic substance that may be employed in the structure shown in Figure 19. In the structure of Figure 19, the optically anisotropic substance is located above the liquid crystal cell412. However, it is to be appreciated that the upper and lower relationship has no relation to the subject matter of the present invention. This is also applicable to the positioning relationship between the Liquid crystal cell 412 and the optically anisotropic substance in Figures 20 and 24.

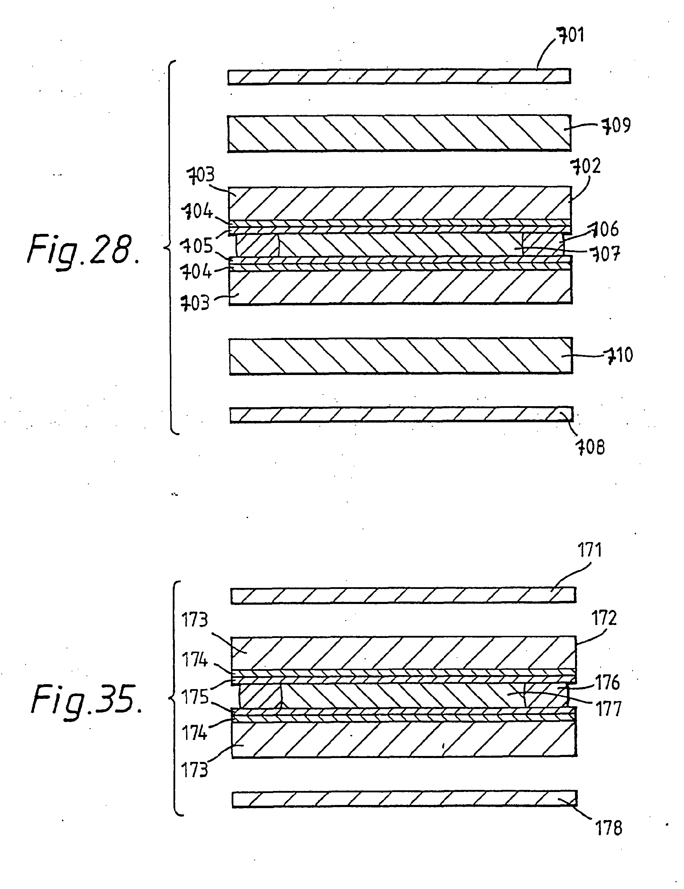

Figure 28 shows another example of the structure of a Liquid crystal display device according to the present invention. Figure 28 is like Figure 19 but with the similar parts being differently numbered. Figure 28 is different from Figure 19 in that the optically anisotropic substance exists above and below the liquid crystal cell. Even in such a structure, the optically anisotropic substance is able to recove the colouring entirely as shown in Figure 20. Naturally it is also able to remove the colouring entirely as shown in Figure 24. The above explanation relates to the condition of having a high transmission of the off state, namely the normally-on state. An explanation will now be given with respect to the condition having the low transmission of the off state, namely the normally-off state. Thus, the polarising light 291, 292, 293 and so on can not pass through the polarising plate 426 so long as the direction of the polarised axis of the polarised plate 426 as shown in Figure 20 is perpendicular to the polarised substrate 422. Therefore, the spectrum of the transmitting light coincides with the spectrum of the polarised plate in the state of cross nicol as shown in Figure 33 by II. (For the present purposes, the light absorption of the Liquid crystal cell and the optically anisotropic substance and so on can be ignored). The condition is the most dark condition which is obtained by using the polarised plate as shown in Figure 33. Therefore, according to the present invention, the spectral properties having the desirable best flatness can be obtained by using the optically anisotropic substance even in the normally-off state. Thus, the removal of the colouring can be realised in every case.

A practical method for calculating the change of polarising state of the light passing through the optically anisotropic substance such Like the liquid crystal cell and so on, will now be given. The incident Light to the optically anisotropic substance is generally the elliptically polarised light. The reference trace of the elliptically polarised light extending to the positive direction of the Z axis is represented with the column vector, in which x and y components are defined as the element as below:-

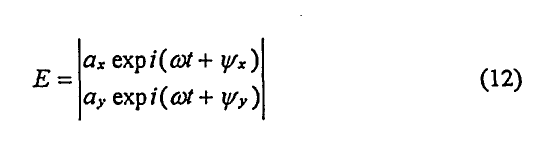

In the above formula 12, aᵢ is an amplitude of the i component, ω is a circular frequency, and ψ is a phase angle of the i component, respectively. However, at this time, since the absolute phase of the vibration has no relation thereto, the optical frequency and the absolute phase of the formula (12) are removed. Further, the polarised condition is represented with the normalised Jones vector as the following formula (13), in which the vibration of each component is caused to be normalised:

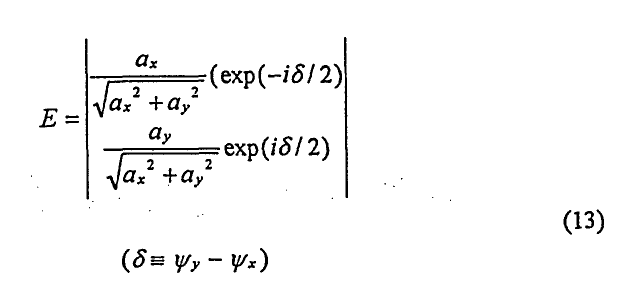

The polarised light E of the formula (13) becomes a polarised light E', as the result of changing the polarising state by passing through the optically anisotropic substance. The optically anisotropic substance is represented by a 2 x 2 Jones matrix which performs the above transformation. For example, in the case where the optically anisotropic substance is a uniaxial linear retarder such like the polymer layer, the Jones matrix is represented as follows:

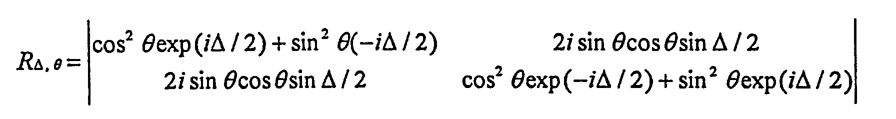

In the above formula (14) θ is an angle between the fast axis of the linear retarder and the x axis, and Δ is a retardation. The retardation is defined as Δn ≡ 2 n x d/λ using Δn x d of the linear retarder and the wavelength λ of the light.

The polarising state passing through the polymer layer is found by functioning the Jones matrix R_{Δθ'} of the formula (14) from the left side of the incident light vector E as follows:${\text{E' = R}}_{\text{Δ,θ}} \text{E}$

In the case where the optically anisotropic substance is formed by laminating some polymer layers, the following formula is found by functioning the Jones matrix of the formula (14) one after another in accordance with the order that the light passes through from the left side of the incident light vector${\text{E' = R}}_{\text{Δn,θn}} {\text{R}}_{\text{Δn-1,θn-1}} {\text{..... R}}_{\text{Δ2,θ2}} {\text{R}}_{\text{Δ1,θ1}} \text{E}$

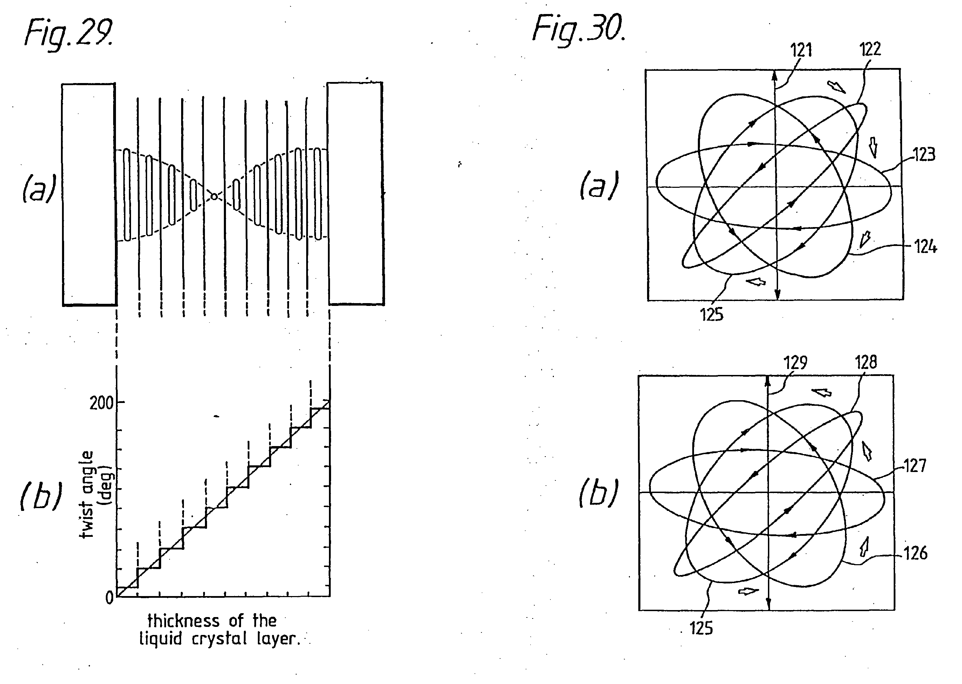

Where the optically anisotropic substance is the liquid crystal cell, it becomes difficult as the retarder due to the twist orientation of the liquid crystal molecule. However, if the liquid crystal layer is divided into considerably many layers as shown in Figure 29(a), it can be represented by the subsequences of the liquid crystal Layers which is not twisted as shown in Figure 29(b). Since the liquid crystal layer which is not twisted, is the uniaxial linear retarder as well as the polymer layer, the polarising state of the light passing through the liquid crystal cell can be found by the same method as the case of Laminating some polymer layers as mentioned above.

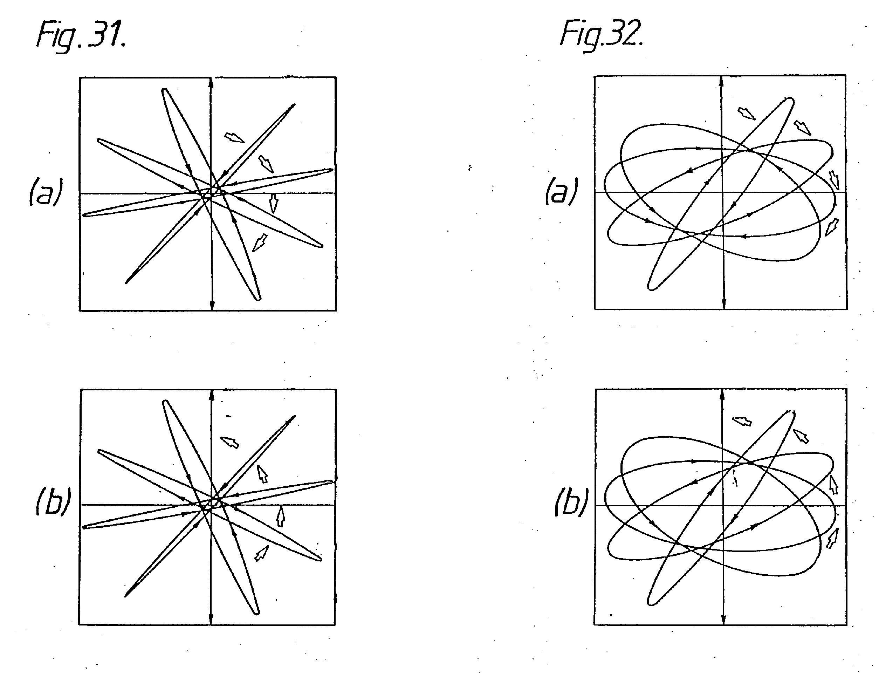

With using the above method, it is to be given that the angle 440 of Figure 21 is 200°, the angle 438 is -200°, the angle 430 is 45°, the angle 437 is 45°, the angle 439 is 90°, and both of Δn x d of the liquid crystal cell for displaying and the liquid crystal cell of the optically anisotropic substance are 0.9µm, respectively. Under these conditions, the polarising state is calculated by dividing the liquid crystal layer into 20 pieces. The transitions of the polarising state are shown in Figures 30 to 32. Figures 30, 31 and 32 show the transitions of the polarising state whose wave length is 450 nm, 550 nm and 650 nm, respectively. For example, in Figure 30(a), the polarising state of the linearly polarised light 121, which is incident light to the liquid crystal cell for displaying, transits to 122, 123 and 124 every fifth layer; and at last the cell is injected at the elliptically polarised light of 125. In Figure 30(b), the resulting elliptically polarised light 125 becomes the incident light to the optically anisotropic substance, and the polarising state of the elliptically polarised light 125 transits to 126, 127 and 128 every fifth layer; and at last the optically anisotropic substance is injected at the linearly polarised Light of 129. In each above mentioned course, the transition of the polarising state by the optically anisotropic substance as shown in the Figures (b) corresponds to the entirely opposite transition of that by the liquid crystal cell for displaying as shown in the Figures (a). Therefore, the incident light to the liquid crystal cell injects the optically anisotropic substance at entirely the same polarising state. Since the effect is obtained regardless of the wave Length of the Light as clearly shown from Figures 31 and 32, it is possible in the Liquid crystal display device having the structure that the colouring at the time of off state is entirely dissoluted, and that the required whitening is obtained.

It is to be appreciated that the embodiments described above with reference to the examples have been given by way of example only and that modifications may be effected. Thus, for example, the explanations given above for Figures 19 to 39 may apply where appropriate to Figures 1 to 18.

## Claims

1. A liquid crystal display device which has a nematic liquid crystal layer (424) oriented at a twist angle and a linear polariser (422) which emits linearly polarised light (231, 232, 233) towards the nematic liquid crystal layer, **characterised in that**:
the polarisation axis of the linear polariser is neither perpendicular nor parallel to the molecule longer axis of the nematic liquid crystal at the surface where the linearly polarised light comes in so that the nematic liquid crystal layer transforms a polarisation state of the linearly polarised light,
wherein an optically anisotropic substance (426), which makes an inverse transformation against the transformation made by the nematic liquid crystal layer, is disposed on the opposite side of the nematic liquid crystal layer compared to the polariser.

2. A liquid crystal display device which has a nematic liquid crystal layer oriented at a twist angle and a linear polariser which emits linearly polarised light, **characterised in that**:
an optically anisotropic substance whose optical axis is neither perpendicular nor parallel to the direction of the polarisation axis of the linear polariser, is disposed between the nematic liquid crystal and the linear polariser so that the optically anisotropic substance transforms a polarisation state of the linearly polarised light,
wherein the optically anisotropic substance makes an inverse transformation against the transformation made by the nematic liquid crystal layer.

3. A liquid crystal display device as claimed in claim 2, **characterised in that**:
the angle between the optical axis of the optically anisotropic substance and the polarisation axis of the linear polariser is in the range of 35° to 55°;
the angle between the optical axis of the optically anisotropic substance and the orientation of the nematic liquid crystal at the surface thereof facing the optically anisotropic substance is in the range of 80° to 100°; and
the Δnd value of the optically anisotropic substance is in the range 0.25µm to 0.85µm.

4. A liquid crystal display device as claimed in claim 3, **characterised in that**:
the Δnd value of the optically anisotropic substance is in the range 0.25µm to 0.45µm; or
the Δnd value of the optically anisotropic substance is in the range 0.4µm to 0.6µm; or
the Δnd value of the optically anisotropic substance is in the range 0.5µm to 0.6µm; or
the Δnd value of the optically anisotropic substance is in the range 0.5µm to 0.7µm; or
the Δnd value of the optically anisotropic substance is in the range 0.65µm to 0.85µm.

5. A liquid crystal display device as claimed in claim 2, **characterised in that**:
the angle between the optical axis of the optically anisotropic substance and the polarisation axis of the linear polariser is about 40°;
the angle between the optical axis of the optically anisotropic substance and the orientation of the nematic liquid crystal at the surface thereof facing the optically anisotropic substance is about 90°; and
the Δnd value of the optically anisotropic substance is about 0.55µm.

6. A liquid crystal display device as claimed in claim 2, **characterised in that**:
the angle between the optical axis of the optically anisotropic substance and the polarisation axis of the linear polariser is about 50°;
the angle between the optical axis of the optically anisotropic substance and the orientation of the nematic liquid crystal at the surface thereof facing the optically anisotropic substance is about 90°; and
the Δnd value of the optically anisotropic substance is about 0.65µm.

7. A liquid crystal display device as claimed in claim 2, **characterised in that**:
a second optically anisotropic substance is provided, disposed on the opposite side of the nematic liquid crystal compared to the first optically anisotropic substance;
the angle between the optical axis of the first optically anisotropic substance and the polarisation axis of the linear polariser is about 50°;
the angle between the optical axis of the first optically anisotropic substance and the orientation of the nematic liquid crystal at the surface thereof facing the optically anisotropic substance is about 90°; and
the Δnd value of the first optically anisotropic substance added to the Δnd value of the second optically anisotropic substance is about 0.6µm.

8. A liquid crystal display device as claimed in claim 2, **characterised in that**:
the angle between the optical axis of the optically anisotropic substance and the polarisation axis of the linear polariser is about 50°;
the angle between the optical axis of the optically anisotropic substance and the orientation of the nematic liquid crystal at the surface thereof facing the optically anisotropic substance is about 90°;
the optically anisotropic substance is composed of a plurality of layers whose optical axes are twisted in the amount 15° between the first layer and the last layer; and
the Δnd value of the optically anisotropic substance is about 0.7µm.

9. A liquid crystal display device according to any preceding claim **characterised in that** a reflector is provide so as to produce a reflective display device.

10. A liquid crystal display device according to claim 1 or claim 2, **characterised in that**:
a second polariser is provided, disposed on the opposite side of the nematic liquid crystal layer compared to the said linear polariser,
the optically anisotropic substance comprises at least two layers, the layers being disposed between the polarisers and being separated from each other by the nematic liquid crystal layer, and
the nematic liquid crystal layer is disposed in a display cell (6).

11. A liquid crystal display device according to claim 10 **characterised in that** the polarising axis direction of each of the polarisers (1, 10) makes an angle between 30° to 60° with the molecule longer axis direction or optical axis direction respectively of the display cell (6) and the optically anisotropic substance (5).

12. A liquid crystal display device according to claim 10 or claim 11 **characterised in** the Δ n x d of the twist nematic liquid crystal layer (9) of said display cell (6) is in the range of 0.6 to 1.5 µm.

13. A liquid crystal display device according to any one of claims 10 to 12**characterised in that** the optically anisotropic substance (5) is a liquid crystal which is oriented between two opposite substrates.

14. A liquid crystal display device according to claim 13 **characterised in that** the twist angle of the optically anisotropic liquid crystal (5) for compensating for colour of said display is in the range between approximately -550° and approximately +300°.

15. A liquid crystal display device according to claim 13 or claim 14 **characterised in that** Δn x d of the optically anisotropic liquid crystal (5) for compensating for colour of said display is in the range of 0.7 and 1 µm.

16. A liquid crystal display device according to any one of claims 13 to 15 **characterised in that** the orientation of the liquid crystal molecules at the surfaces where the nematic liquid crystal of said display cell (6) and the optically anisotropic liquid crystal (5) for compensating for colour of said display face each other is substantially 90°.

17. A liquid crystal display device according to any one of claims 13 to 16 **characterised in that** the optically anisotropic liquid substance (5) for compensating for colour of said display is formed or oriented nematic liquid crystal or cholesteric liquid crystal.

18. A liquid crystal display device according to any one of claims 13 to 16 **characterised in that** the optically anisotropic liquid substance (5) for compensating for colour of said display is formed of twistedly oriented nematic liquid crystal.

19. A liquid crystal display device according to any one of claims 10 to 18 **characterised by** said optically anisotropic substance (5) comprising a plurality of layers with cumulatively produce the said compensating wavelength dependent change in polarisation.

20. A liquid crystal display device according to any one of claims 17 and 18 **characterised in that** the nematic liquid crystal of said display cell (6) and the nematic liquid crystal (5) of the optically anisotropic liquid substance for compensating for colour of said display have the opposite twist direction to each other.

21. A liquid crystal display device according to any one of claims 17, 18 or 20 **characterised in that** the nematic liquid crystal of said display cell (6) and the nematic liquid crystal (5) of the optically anisotropic liquid substance for compensating for colour of said display have substantially equal twist angle and Δn x d to each other.

22. A liquid crystal display device according to any one of claims 10 to 12 **characterised in that** the optically anisotropic substance (5) is in a polymeric film state.

23. A liquid crystal display device according to claim 22 **characterised in that** if more than two layers of the optically anisotropic substance (5) are used, the directions of optic axes between at least two layers are different.

24. A liquid crystal display device according to claim 22 or claim 23 **characterised in that** said polymeric film is a liquid crystal polymer film.

25. A liquid crystal display device according to claim 22 **characterised in that** a plurality of compensating polymeric films are disposed between the liquid crystal display cell (6) and the second polariser (1).

26. A liquid crystal display device as claimed in claim 22 **characterised in that** the said polymeric film and one of the polarisers are formed as a unitary component (58).

27. A liquid crystal display device according to any one of claims 22, 25, or 26 **characterised in that** the or each polymeric film is a stretched film selected from diacetyl cellulose, polyethylene terephthalate, cellulose diacetate, polyvinyl alcohol, polyamide, polyether sulfone, acryl, polysulfone, polyimide and polyolefin.

28. A liquid crystal display device according to claim 13 **characterised in that** the liquid crystal of the display device (6) has a twist angle of +200° and a Δ n x d value of 0.9 µm and that the said optically anisotropic liquid crystal (5) for colour compensation has a twist angle in the range of approximately +300° to approximately -300° and has a Δn x d value in the range of approximately 0.4 µm to approximately 1.4 µm.

29. A liquid crystal display device according to claim 13 **characterised in that** the liquid crystal of the display device (6) has a twist angle of +250° and a Δn x d value of 0.9 µm and that the said optically anisotropic liquid crystal (5) for colour compensation has a twist angle in the range of approximately +100° to approximately -550° and has a Δn x d value in the range of approximately 0.4 µm to approximately 1.5 µm.

30. A liquid crystal display device according to claim 13 **characterised in that** the liquid crystal of the display device (6) has a twist angle of +120° and a Δn x d value of 0.9 µm and that the said optically anisotropic liquid crystal (5) for colour compensation has a twist angle in the range of approximately +100° to approximately -400° and has a Δn x d value in the range of approximately 0.5 µm to approximately 1.4 µm.

31. A liquid crystal display device according to claim 13 **characterised in that** the liquid crystal of the display device (6) has a twist angle of +200° and a Δn x d value of 0.6 µm and that the said optically anisotropic liquid crystal (5) for colour compensation has a twist angle in the range of approximately +100° to approximately -350° and has a Δ n x d value in the range of approximately 0.2 µm to approximately 1.3 µm.

32. A liquid crystal display device according to claim 13 **characterised in that** the liquid crystal of the display device (6) has a twist angle of +200° and a Δ n x d value of 1.5 µm and that the said optically anisotropic liquid crystal (5) for colour compensation has a twist angle in the range of approximately +100° to approximately -400° and has a Δn x d value in the range of approximately 0.9 µm to approximately 1.9 µm.

33. A liquid crystal display device according to claim 13 **characterised in that** the liquid crystal of the display device (6) has a twist angle of +350° and a Δn x d value of 0.9 µm and that the said optically anisotropic liquid crystal (5) for colour compensation has a twist angle in the range of approximately +100° to approximately -550° and has a Δn x d value in the range of approximately 0.2 µm to approximately 1.5 µm.
